# EUROPEAN PATENT APPLICATION

(11) **EP 3 139 317 A1**
(43) Date of publication of application: **08.03.2017**
(21) Application number: 16178952.4
(22) Date of filing: 12.07.2016
(51) Int. Cl.: G06Q 10/00

(54) **PLATFORM MANAGEMENT SYSTEM, APPARATUS, AND METHOD**

(30) Priority: 01.09.2015 US 201514841926
(71) Applicant: The Boeing Company, Chicago, IL 60606-1596 (US)
(72) Inventor: KESLER, Paul A., Chicago, 60606-1596 (US); BOUVIER, Kenneth D., Chicago, 60606-1596 (US); WOJCYK, William E., Chicago, 60606-1596 (US); ARROW, Kevin M., Chicago, 60606-1596 (US); STURLAUGSON, Liessman, Chicago, 60606-1596 (US)
(74) Representative: Witte, Weller & Partner Patentanwälte mbB

(57) **Abstract**

A platform management system, apparatus, and method are disclosed that track schedule interruption data and at least one of delay risk data, deferral risk data, deferral data, and dispatch reliability data over time, compute cross-correlations between the schedule interruption data and the at least one of the delay risk data, the deferral risk data, the deferral data, and the dispatch reliability data, and computing a statistically significant probability of a schedule interruption based on the cross-correlations and a trend of the at least one of the delay risk data, the deferred maintenance data, the deferral data, and the dispatch reliability data projected over a predetermined time period into the future, and that compute delay risk data based on projected schedule interruption data and delay data.

## Description

### BACKGROUND

The present disclosure is generally related to mobile platform management and, more particularly, to systems, apparatus, and methods for schedule and maintenance management of mobile platforms such as aircraft. There are many systems and methods for managing flight schedules and maintenance of an aircraft. Many systems can configure a flight schedule and schedule routine periodic maintenance events for the aircraft. Flight-scheduling systems may take into account the scheduled maintenance of the aircraft when configuring the flight schedule. Airlines typically also have procedures in place to allow for the deferral of maintenance of the aircraft. As one example, operators of an airline may choose to defer maintenance or forego the repair of the fault for various reasons. Maintenance-management systems may accommodate an unexpected maintenance event occurring on the aircraft by coordinating maintenance resources on the ground to repair a fault associated with the unexpected maintenance event. However, there are currently no systems that manage the risk of potential schedule interruptions.

Accordingly, those skilled in the art continue with research and development efforts in the field of aircraft management systems.

### SUMMARY

In one example, the disclosed platform management system may include a data network that receives input data from data sources, wherein the input data includes schedule interruption data and at least one of delay risk data, deferral risk data, deferral data, and dispatch reliability data, and a schedule interruption prediction module that receives the input data from the data network, wherein the schedule interruption prediction apparatus includes a data tracking module that tracks the schedule interruption data and the at least one of the delay risk data, the deferral risk data, the deferral data, and the dispatch reliability data over time, a data correlation module that computes cross-correlations between the schedule interruption data and the at least one of the delay risk data, the deferral risk data, the deferral data, and the dispatch reliability data, and a data trend analysis module that computes a statistically significant probability of a schedule interruption based on the cross-correlations and a trend of the at least one of the delay risk data, the deferral risk data, the deferral data, and the dispatch reliability data projected over a predetermined time period into the future.

In another example, the disclosed platform management system may include a data network that receives input data from data sources, wherein the input data comprises projected schedule interruption data and delay data, and a delay risk module that receives the input data from the data network, wherein the delay risk module comprises a risk analysis module that computes delay risk data based on the projected schedule interruption data and the delay data.

In another example, the disclosed method for managing a platform system may include the steps of: (1) tracking schedule interruption data and at least one of delay risk data, deferral risk data, deferral data, and dispatch reliability data over time, (2) computing cross-correlations between the schedule interruption data and the at least one of the delay risk data, the deferral risk data, the deferral data, and the dispatch reliability data, and (3) computing a statistically significant probability of a schedule interruption based on the cross-correlations and a trend of the at least one of the delay risk data, the deferred maintenance data, the deferral data, and the dispatch reliability data projected over a predetermined time period into the future.

In another example, the disclosed method for managing a platform system may include the steps of: (1) receiving projected schedule interruption data and delay data, and (2) computing delay risk data based on the projected schedule interruption data and the delay data.

Other examples of the disclosed systems, apparatuses, and methods will become apparent from the following detailed description, the accompanying drawings and the appended claims.

### BRIEF DESCRIPTION OF THE DRAWINGS

Fig. 1 is a schematic block diagram of one example of the disclosed platform management system;
Fig. 2 is a schematic block diagram of one example of the disclosed schedule interruption prediction module;
Fig. 3 is a schematic illustration of one example of a display depicting tracked data;
Fig. 4 is a schematic illustration of one example of the display depicting cross-correlations of the tracked data indicating statistically significant probabilities of schedule interruptions;
Fig. 5 is a schematic block diagram of one example of the disclosed deferral risk module;
Fig. 6 is a schematic block diagram of one example of the disclosed dispatch reliability module;
Fig. 7 is a schematic block diagram of one example of the disclosed delay risk module;
Fig. 8 is a schematic illustration of one example of the display depicting delay risk data;
Fig. 9 is a schematic illustration of one example of the display depicting performance data;
Fig. 10 is a schematic flow diagram of one example of the disclosed method for managing a platform system;
Fig. 11 is a schematic flow diagram of one example of the disclosed method for managing a platform system;
Fig. 12 is a block diagram of aircraft production and service methodology; and
Fig. 13 is a schematic illustration of an aircraft.

### DETAILED DESCRIPTION

The following detailed description refers to the accompanying drawings, which illustrate specific examples of the disclosure. Other examples having different structures and operations do not depart from the scope of the present disclosure. Like reference numerals may refer to the same element or component in the different drawings.

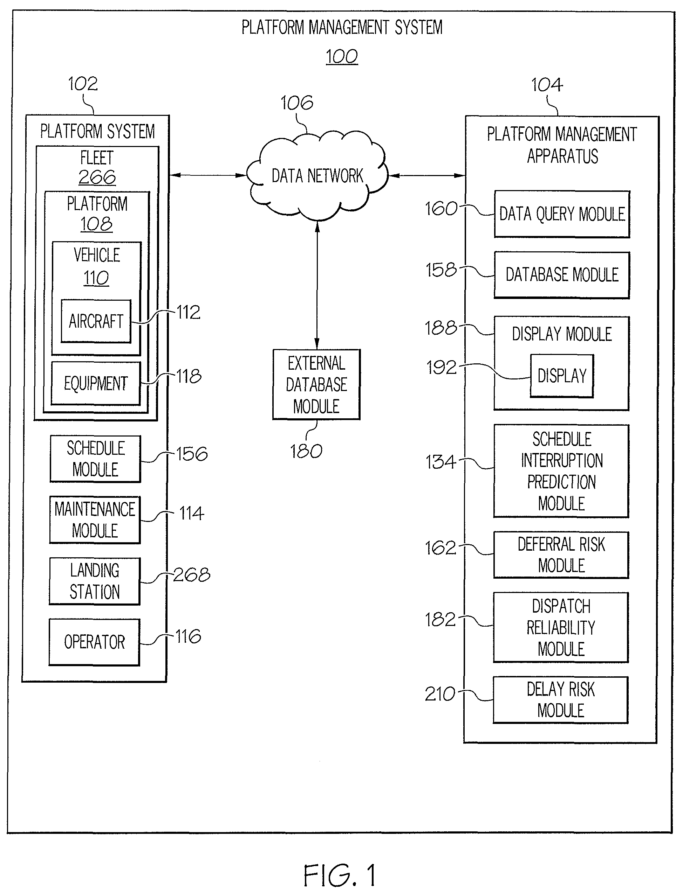

In Figs. 1, 2, 5-7 and 13, referred to above, solid lines, if any, connecting various elements and/or components may represent mechanical, electrical, fluid, optical, electromagnetic and other couplings and/or combinations thereof. As used herein, "coupled" means associated directly as well as indirectly. For example, a member A may be directly associated with a member B, or may be indirectly associated therewith, e.g., via another member C. It will be understood that not all relationships among the various disclosed elements are necessarily represented. Accordingly, couplings other than those depicted in the block diagrams may also exist. Dashed lines, if any, connecting blocks designating the various elements and/or components represent couplings similar in function and purpose to those represented by solid lines; however, couplings represented by the dashed lines may either be selectively provided or may relate to alternative examples of the present disclosure. Likewise, elements and/or components, if any, represented with dashed lines, indicate alternative examples of the present disclosure. One or more elements shown in solid and/or dashed lines may be omitted from a particular example without departing from the scope of the present disclosure. Environmental elements, if any, are represented with dotted lines. Virtual (imaginary) elements may also be shown for clarity. Those skilled in the art will appreciate that some of the features illustrated in Figs. 1, 2, 5-7 and 13 may be combined in various ways without the need to include other features described in Figs. 1, 2, 5-7 and 13, other drawing figures, and/or the accompanying disclosure, even though such combination or combinations are not explicitly illustrated herein. Similarly, additional features not limited to the examples presented, may be combined with some or all of the features shown and described herein.

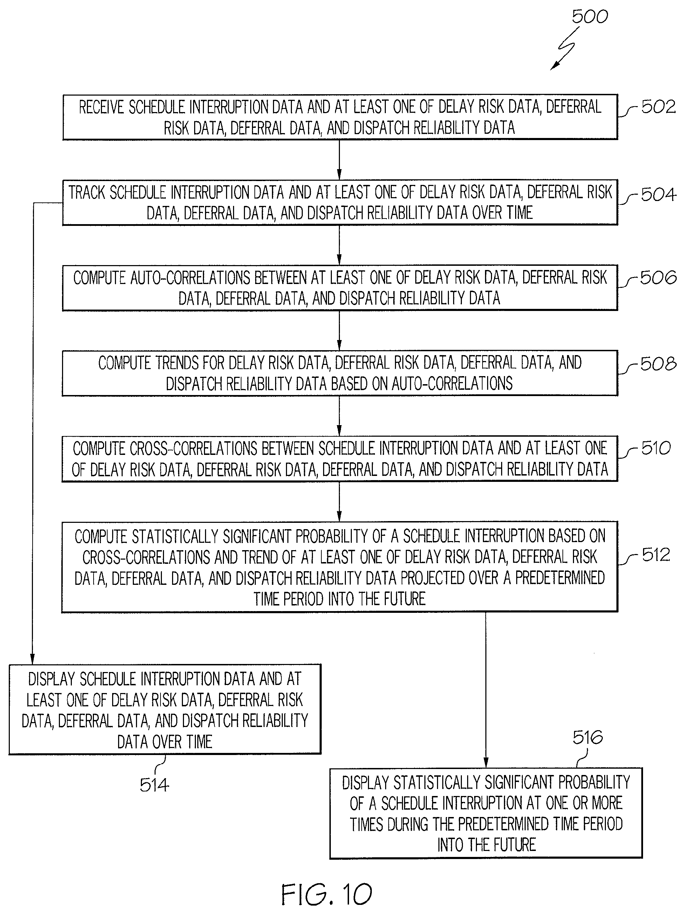

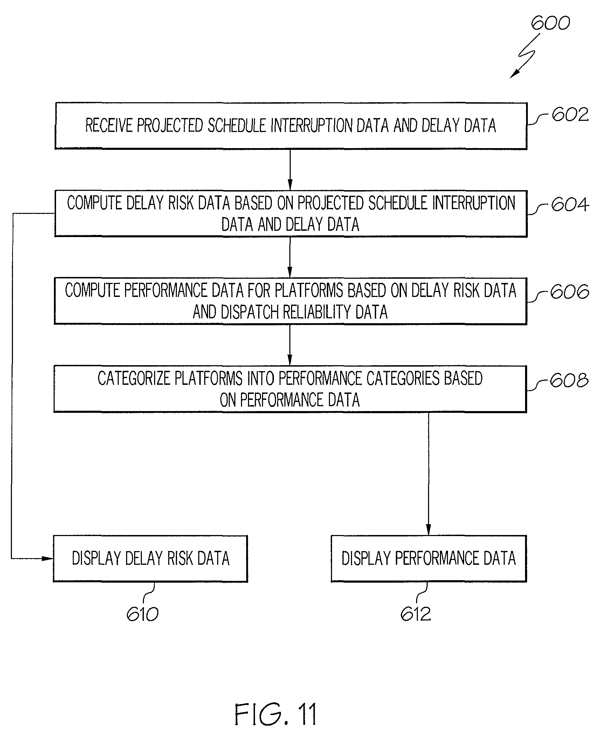

In Figs. 10-12, referred to above, the blocks may represent operations and/or portions thereof and lines connecting the various blocks do not imply any particular order or dependency of the operations or portions thereof. Blocks represented by dashed lines, if any, indicate alternative operations and/or portions thereof. Dashed lines, if any, connecting the various blocks represent alternative dependencies of the operations or portions thereof. It will be understood that not all dependencies among the various disclosed operations are necessarily represented. Figs. 10-12 and the accompanying disclosure describing the operations of the method(s) set forth herein should not be interpreted as necessarily determining a sequence in which the operations are to be performed. Rather, although one illustrative order is indicated, it is to be understood that the sequence of the operations may be modified when appropriate. Accordingly, certain operations may be performed in a different order or simultaneously. Additionally, those skilled in the art will appreciate that not all operations described need be performed.

In the following description, numerous specific details are set forth to provide a thorough understanding of the disclosed concepts, which may be practiced without some or all of these particulars. In other instances, details of known devices and/or processes have been omitted to avoid unnecessarily obscuring the disclosure. While some concepts will be described in conjunction with specific examples, it will be understood that these examples are not intended to be limiting.

Unless otherwise indicated, the terms "first," "second," etc. are used herein merely as labels, and are not intended to impose ordinal, positional, or hierarchical requirements on the items to which these terms refer. Moreover, reference to a "second" item does not require or preclude the existence of lower-numbered item (e.g., a "first" item) and/or a higher-numbered item (e.g., a "third" item).

As used herein, the phrase "at least one of'', when used with a list of items, means different combinations of one or more of the listed items may be used and only one of the items in the list may be needed. The item may be a particular object, thing, or category. In other words, "at least one of'' means any combination of items or number of items may be used from the list, but not all of the items in the list may be required. For example, "at least one of item A, item B, and item C" may mean item A; item A and item B; item B; item A, item B, and item C; or item B and item C. In some cases, "at least one of item A, item B, and item C" may mean, for example and without limitation, two of item A, one of item B, and ten of item C; four of item B and seven of item C; or some other suitable combination.

Reference herein to "example" means that one or more feature, structure, or characteristic described in connection with the example is included in at least one embodiment or implementation. The phrases "one example," "another example," and the like in various places in the specification may or may not be referring to the same example.

Illustrative, non-exhaustive examples, which may or may not be claimed, of the subject matter according the present disclosure are provided below.

Referring generally to Fig. 1, one example of platform management system, generally designated 100, is disclosed. Platform management system 100 includes platform system 102, platform management apparatus 104, and data network 106. Platform system 102 and platform management apparatus 104 may communicate with each other, for example, over data network 106.

As one example, data network 106 transmits digital communications between platform system 102 and platform management apparatus 104. Data network 106 may be a wireless network, such as a wireless telephone network, a local wireless network (e.g., a Wi-Fi network or a Bluetooth® network), and the like. Data network 106 may also include other wireless-type communications, such as optical communications (e.g., laser and infrared) and/or electromagnetic communications (e.g., radio waves). Data network 106 also may be a wired network.

In one example implementation, data network 106 may include a wide area network ("WAN"), a storage area network ("SAN"), a local area network ("LAN"), an optical fiber network, the Internet, or other data network known in the art. Data network 106 may include two or more networks.

In other example implementations, data network 106 may include one or more servers, routers, switches, and/or other networking equipment. Data network 106 may include computer readable storage media, such as a hard disk drive, a mass storage unit, an optical drive, nonvolatile memory, random access memory ("RAM"), or the like. In certain implementations, data network 106 may be two physically separate data networks such that one data network is coupled to platform system 102 and another data network is coupled to platform management apparatus 104.

Referring to Fig. 1, generally platform system 102 maintains and controls the operation of one or more platforms 108. As one example, platform system 102 may maintain and control fleet 266. As one example, fleet 266 includes a plurality of platforms 108.

Platform 108 may include any type of mobile system or mobile platform. As one example, platform 108 may be any type of vehicle 110 (e.g., air vehicle, surface vehicle, marine vehicle, or subsurface vehicle). Vehicle 110 may be manned or unmanned. The terms vehicle and platform may be used interchangeably herein to refer, for example and without limitation, to manned or unmanned aircraft, spacecraft, trucks, automobiles, trains, maritime vessels, missiles or other weapons, and the like.

As one specific, non-limiting example, platform 108 (e.g., vehicle 110) may be aircraft 112. Although platform system 102 is described herein as an airline system associated with commercial aircraft (e.g., aircraft 112), platform system 102 may manage (e.g., maintain and control) the operation (e.g., schedule and maintenance) of any of various other types of vehicles, such as non-commercial aircraft, other types of commercial and non-commercial vehicles, watercraft, cars, trucks, buses, and the like.

Platform 108 includes equipment 118. As used herein, "equipment" refers to any system, subsystem, component, subcomponent, unit, subunit, part or the like, without limitation, of platform 108 (e.g., aircraft 112). As one example, equipment 118 may be a particular line-replaceable unit ("LRU") of aircraft 112. Similar platforms 108 may include the same equipment 118. Different platforms 108 may include the same and/or different equipment 118. Fleet 266 may include similar platforms 108 and/or different platforms 108.

As one example, platform system 102 also includes schedule module 156. Schedule module 156 may monitor and/or store information related to the locations and/or schedules of fleet 266 and/or individual platforms 108. As one example, schedule module 156 may monitor and/or store current and future locations of platforms 108 (e.g., aircraft 112) and/or current and future schedules of platforms 108 (e.g., flight schedules of aircraft 112).

As one example, platform system 102 also includes maintenance module 114. Maintenance module 114 may monitor and/or store information related to maintenance of fleet 266, maintenance of individual platforms 108, and/or maintenance of particular equipment 118. As one example, maintenance module 114 may monitor and/or store current and future maintenance schedules, current and past maintenance events, current and future maintenance deferrals, and/or maintenance capabilities, for example, of landing stations 268.

As one example, platform system 102 also includes operators 116, for example, located at landing stations 268. Operators 116 may perform maintenance on platform 108 and/or equipment 118, make decisions concerning the maintenance of platform 108 and/or equipment 118, and/or enter maintenance information concerning platform 108 and/or equipment 118, for example, into maintenance module 114.

The present disclosure recognizes that although some platform (e.g., aircraft) maintenance systems may facilitate the monitoring and delivery of information concerning platform faults, schedule interruptions, maintenance deferrals, and operational impacts associated with maintenance deferrals, such systems do not predict potential schedule interruptions or quantify and assess the risk of future schedule interruptions, for example, due to unscheduled maintenance events. Accordingly, the subject matter of the present disclosure has been developed to provide systems, apparatuses, and methods for predicting schedule interruptions and/or assessing the risk of future schedule interruptions.

As used herein, fault generally refers to any indication that equipment 118 (Fig. 1) has malfunctioned, has broken, has been disabled, or has failed to otherwise operate in an expected or normal manner.

As used herein, schedule interruption generally refers to an interruption or disruption in the planned operational schedule of platform 108 (Fig. 1), for example, due to a fault in equipment 118 (Fig. 1) resulting in an unscheduled maintenance event. Schedule interruption includes a delay, for example, when platform 108 (e.g., aircraft 112) fails to depart at its scheduled time due to a maintenance event or fault in equipment 118; a turn back, for example, when platform departs on schedule but must return to its departure location due to a fault in equipment 118; a diversion, for example, when platform 108 departs on schedule but must divert to a location other than its departure or destination location due to a fault in equipment 118; or a cancellation, for example, where operation of platform 108 is ceased.

As used herein, maintenance deferral generally refers to a deferral or postponement of repair to or maintenance of equipment 118 (Fig. 1), for example, following a fault.

As used herein, the term impact generally refers to the impact of operating platform 108 (Fig. 1), for example, following a fault or a maintenance deferral.

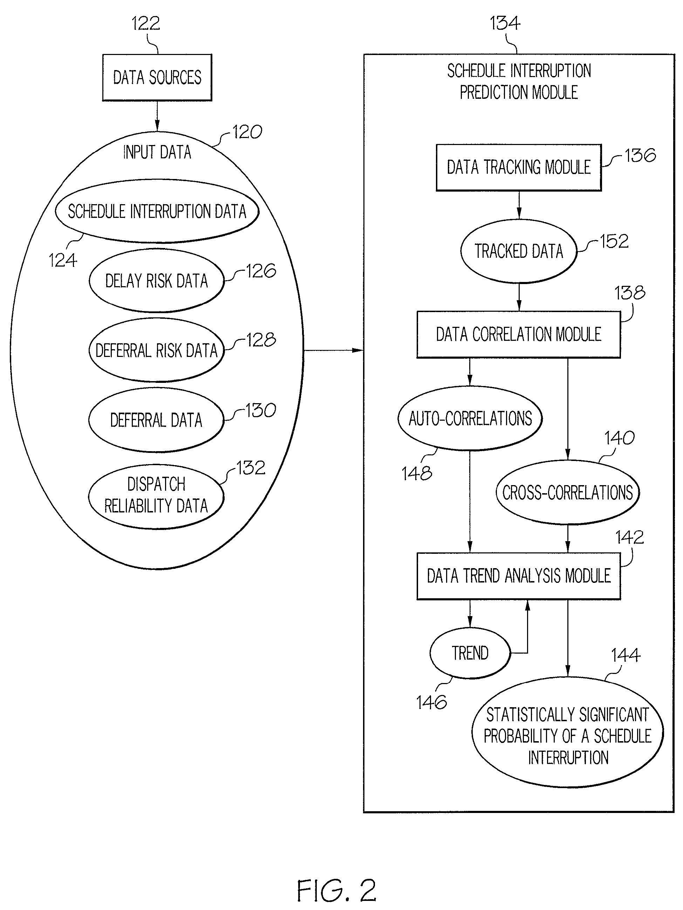

Referring to Fig. 1, and with reference to Fig. 2, one example of platform management apparatus 104 is disclosed. As one example, platform management apparatus 104 includes schedule interruption prediction module 134 that receives input data 120 (Fig. 2), for example, from data sources 122 (Fig. 2).

As one example, platform management apparatus 104 includes data query module 160. Data query module 160 accesses various input data 120 (Fig. 2) from data sources 122 (Fig. 2). Data query module 160 may determine which of input data 120 is selected and provided to schedule interruption prediction module 134. As one example, data query module 160 constructs a query to extract selected input data 120 from data sources 122 related to fleet 266, individual platforms 108, and/or particular equipment 118.

As one example, data query module 160 communicates with data sources 122 (Fig. 2) over data network 106 using any of various electronic communication protocols. Access to input data 120 (Fig. 2) may include storing a local copy of the selected input data 120 in memory (not explicitly illustrated) of data query module 160 specifically or platform management apparatus 104 generally.

Data sources 122 (Fig. 2) may include any database or similar information system that monitors and/or stores input data 120 (Fig. 2). As examples, data sources 122 may include schedule module 156, maintenance module 114, external database module 180, database module 158 of platform management apparatus 104, and the like. As one example, external database module 180 may be a database or information system controlled by a public or private third party, such as the U.S. Department of Transportation Research and Innovative Technology Administrations ("RITA") database, masFlight, and the like.

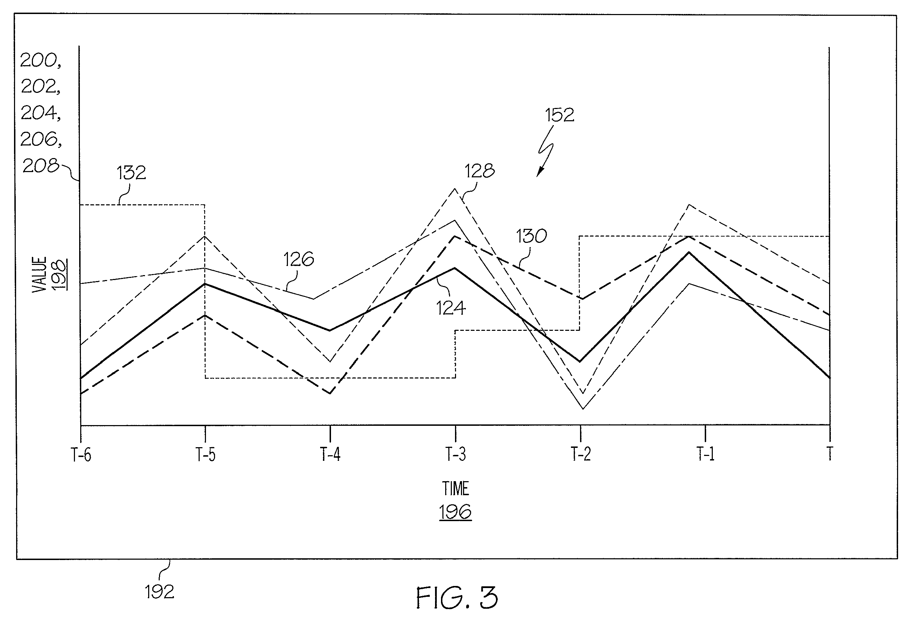

Referring to Fig. 2, and with reference to Figs. 1 and 3, as one example, input data 120 may include schedule interruption data 124 and at least one of delay risk data 126, deferral risk data 128, deferral data 130, and dispatch reliability data 132.

As one example, schedule interruption data 124 includes a quantification of schedule interruptions of fleet 266 (Fig. 1) and/or individual platforms 108 (Fig. 1). As one example, schedule interruption data 124 includes a quantification of schedule interruptions of fleet 266 and/or individual platforms 108 due to prior or previous faults in equipment 118 (Fig. 1). In one example implementation, schedule interruption data 124 may be expressed as numerical value 198 (e.g., schedule interruption value 200) (Fig. 3) representing the number of schedule interruptions per platform 108 or per fleet 266.

As one example, deferral risk data 128 includes a quantification of the risk resulting from maintenance deferrals of platforms 108 (Fig. 1). As one example, deferral risk data 128 includes a quantification of the deferral risk related to potential schedule interruptions due to maintenance deferrals of platforms 108. In one example implementation, deferral risk data 128 may be expressed as numerical value 198 (e.g., deferral risk value 202) (Fig. 3) representing the impact associated with the maintenance deferral (e.g., a deferred maintenance event).

As one example, deferral data 130 includes a quantification of the maintenance deferrals of platforms 108 (Fig. 1). As one example, deferral data 130 includes a quantification of the delay times (e.g., an average delay time) resulting from prior schedule interruptions due to prior faults in equipment 118 (Fig. 1) and/or the maintenance deferrals of platforms 108. In one example implementation, deferral data 130 may be expressed as numerical value 198 (e.g., deferral value 204) (Fig. 3) representing the number of maintenance deferrals per platform 108 or per fleet 266.

As one example, dispatch reliability data 132 includes a quantification of reliability of platform 108 (Fig. 1) and/or fleet 266 (Fig. 1). As one example, dispatch reliability data 132 includes a quantification of potential schedule reliability of platform 108 and/or fleet 266. In one example implementation, dispatch reliability data 132 may be expressed as numerical value 198 (e.g., dispatch reliability value 206) (Fig. 3) representing the probability of platform 108 remaining on schedule and without a schedule interruption.

As one example, delay risk data 126 includes a quantification of the risk related to a potential schedule interruption of fleet 266 (Fig. 1) and/or individual platforms 108 (Fig. 1). As one example, delay risk data 126 includes a quantification of the delay risk related to a potential schedule interruption of fleet 266 and/or individual platforms 108 due to future faults in equipment 118 (Fig. 1). In one example implementation, delay risk data 126 may be expressed as numerical value 198 (e.g., delay risk value 208) (Fig. 3) representing the probability of a schedule interruption and the impact of the schedule interruption.

Schedule interruption data 124, deferral risk data 128, deferral data 130, dispatch reliably data 132, and delay risk data 126 will be described in more detail herein below. As one example, each one of schedule interruption data 124, deferral risk data 128, deferral data 130, dispatch reliably data 132, and/or delay risk data 126 may generally be conditioned upon particular equipment 118 (Fig. 1).

Referring to Fig. 2, and with reference to Fig. 1, one example of schedule interruption prediction module 134 is disclosed. Schedule interruption prediction module 134 receives input data 120 from data sources 122, for example, via data query module 160 (Fig. 1) over data network 106 (Fig. 1).

While the disclosed examples illustrate a general data query module (e.g., data query module 160) of platform management apparatus 104 configured to query data sources 122 and provide input data 120 to schedule interruption prediction module 134, in other examples, schedule interruption prediction module 134 may include its own data query module (not explicitly illustrated).

Referring to Fig. 2, and with reference to Figs. 1 and 3, as one example, schedule interruption prediction module 134 includes data tracking module 136. Data tracking module 136 tracks schedule interruption data 124 and at least one of delay risk data 126, deferral risk data 128, deferral data 130, and dispatch reliability data 132, identified collectively as tracked data 152 (Fig. 3), over time. In one example implementation, each of schedule interruption data 124 and at least one of delay risk data 126, deferral risk data 128, deferral data 130, and dispatch reliability data 132 is tracked periodically (e.g., daily). As one example, data query module 160 (Fig. 1) may be configured to query data sources 122 daily to extract each of schedule interruption data 124, delay risk data 126, deferral risk data 128, deferral data 130, and dispatch reliability data 132.

Referring to Fig. 1, as one example, platform management apparatus 104 also includes display module 188. Display module 188 is configured to control display 192 (Fig. 1) of platform management apparatus 104. Display 192 may include a graphical user interface ("GUI") for receiving input and/or providing visual representations of data.

Referring to Fig. 3, and with reference to Figs. 1 and 2, as one example, tracked data 152 may be displayed graphically by display module 188 (Fig. 1), for example, on display 192. As one example, display 192 may include a field for tracked data 152, a field for values 198 (e.g., schedule interruption values 200, deferral risk values 202, deferral values 204, dispatch reliability values 206 and delay risk values 208) of tracked data 152, and a field for time 196.

In the example implementation illustrated in Fig. 3, a daily value of each of schedule interruption data 124, delay risk data 126, deferral risk data 128, deferral data 130, and dispatch reliability data 132 is displayed over a predetermined time period. The time period is represented by time T-6 to time T. Time T represents the present day (e.g., today). Times T-1, T-2, T-3, T-4, T-5, and T-6 represent past time intervals, for example, in days (e.g., T-1 is yesterday, T-2 is two days ago, etc.), in weeks (e.g., T-1 is one week ago, T-2 is two weeks ago, etc.), in months (e.g., T-1 is one month ago, T-2 is two months ago, etc.), or in years. As one example, display 192 illustrated in Fig. 3 is a six (6) month view of daily tracked values of schedule interruption data 124, delay risk data 126, deferral risk data 128, deferral data 130, and dispatch reliability data 132.

Referring to Fig. 2, as one example, schedule interruption prediction module 134 also includes data correlation module 138. Data correlation module 138 computes cross-correlations 140 between schedule interruption data 124 and at least one of delay risk data 128, deferral risk data 128, deferral data 130, and dispatch reliability data 132. Generally, cross-correlation is the correlation of two data series relative to one another as a function of time (e.g., a fixed points in time).

In one example implementation, data correlation module 138 is configured to perform a time series analysis between two data series (e.g., two different series of input data 120) as a function of time.

Data correlation module 138 may determine the relationship (e.g., the similarity or dependence) between schedule interruption data 124 and one of or each one of delay risk data 128, deferral risk data 128, deferral data 130, and dispatch reliability data 132, for example, at various fixed points over time. Each cross-correlation 140 is a measure of strength of correlation (e.g., temporal correlation) between schedule interruption data 124 and one of delay risk data 128, deferral risk data 128, deferral data 130, and dispatch reliability data 132, for example, at fixed points in time.

As one example, data correlation module 138 may include rules that govern which of delay risk data 128, deferral risk data 128, deferral data 130, or dispatch reliability data 132 will be selected to be cross-correlated with schedule interruption data 124. Data correlation module 138 may also include algorithms used to compute cross-correlations 140 (e.g., the correlation between the selected two of input data 120). Cross-correlations 140 are computed and/or defined as pairwise cross-correlations. The selected two of input data 120 may also be referred to as a pair of time-series input data representing the time-series analysis of cross-correlations 140.

As one example, schedule interruption prediction module 134 or data correlation module 138 may include a rules module (not explicitly illustrated) configured to store and apply the rules and/or algorithms utilized to compute cross-correlations 140.

In one example implementation, data correlation module 138 may cross-correlate schedule interruption data 124 and delay risk data 128. As one example, delay risk data 128 and schedule interruption data 124 are tracked over time, for example, by data tracking module 136. Cross-correlation 140 of delay risk data 128 and schedule interruption data 124 indicates the relationship between an increase or decrease in delay risk and an increase or decrease in schedule interruptions. In other words, cross-correlation 140 of delay risk data 128 and schedule interruption data 124 quantifies how correlated a schedule interruption is with delay risk.

In one example implementation, data correlation module 138 may cross-correlate schedule interruption data 124 and deferral risk data 128. As one example, deferral risk data 128 and schedule interruption data 124 are tracked over time, for example, by data tracking module 136. Cross-correlation 140 of deferral risk data 128 and schedule interruption data 124 indicates the relationship between an increase or decrease in deferral risk and an increase or decrease in schedule interruptions. In other words, cross-correlation 140 of deferral risk data 128 and schedule interruption data 124 quantifies how correlated a schedule interruption is with deferral risk.

In one example implementation, data correlation module 138 may cross-correlate schedule interruption data 124 and deferral data 130. As one example, deferral data 130 and schedule interruption data 124 are tracked over time, for example, by data tracking module 136. Cross-correlation 140 of deferral data 130 and schedule interruption data 124 indicates the relationship between an increase or decrease in deferrals and an increase or decrease in schedule interruptions. In other words, cross-correlation 140 of deferral data 130 and schedule interruption data 124 quantifies how correlated a schedule interruption is with deferrals.

In one example implementation, data correlation module 138 may cross-correlate schedule interruption data 124 and dispatch reliability data 132. As one example, dispatch reliability data 132 and schedule interruption data 124 are tracked over time, for example, by data tracking module 136. Cross-correlation 140 of dispatch reliability data 132 and schedule interruption data 124 indicates the relationship between an increase in dispatch reliability and an increase or decrease in schedule interruptions. In other words, cross-correlation 140 of dispatch reliability data 132 and schedule interruption data 124 quantifies how correlated a schedule interruption is with dispatch reliability.

Referring to Fig. 2, data correlation module 139 also computes auto-correlations 148 between at least one of delay risk data 128, deferral risk data 128, deferral data 130, and dispatch reliability data 132. Generally, auto-correlation is the correlation of one data series with itself as a function of time (e.g., at different points in time).

Data correlation module 138 may determine the relationship (e.g., the similarity or dependence) between at least one of delay risk data 128 at different times, deferral risk data 128 at different times, deferral data 130 at different times, and dispatch reliability data 132 at different times. Each auto-correlation 148 is a measure of strength of correlation between delay risk data 128 at different times, deferral risk data 128 at different times, deferral data 130 at different times, and dispatch reliability data 132 at different times. Auto-correlation 148 may be used to compute trend 146.

As one example, data correlation module 138 may also include rules that govern which of delay risk data 128, deferral risk data 128, deferral data 130, or dispatch reliability data 132 will be selected to be auto-correlated. Data correlation module 138 may also include algorithms used to compute auto-correlations 148 (e.g., the correlation between the selected input data 120 with itself). As one example, schedule interruption prediction module 134 or data correlation module 138 may include a rules module (not explicitly illustrated) configured to store and apply the rules and/or algorithms utilized to compute auto-correlations 148.

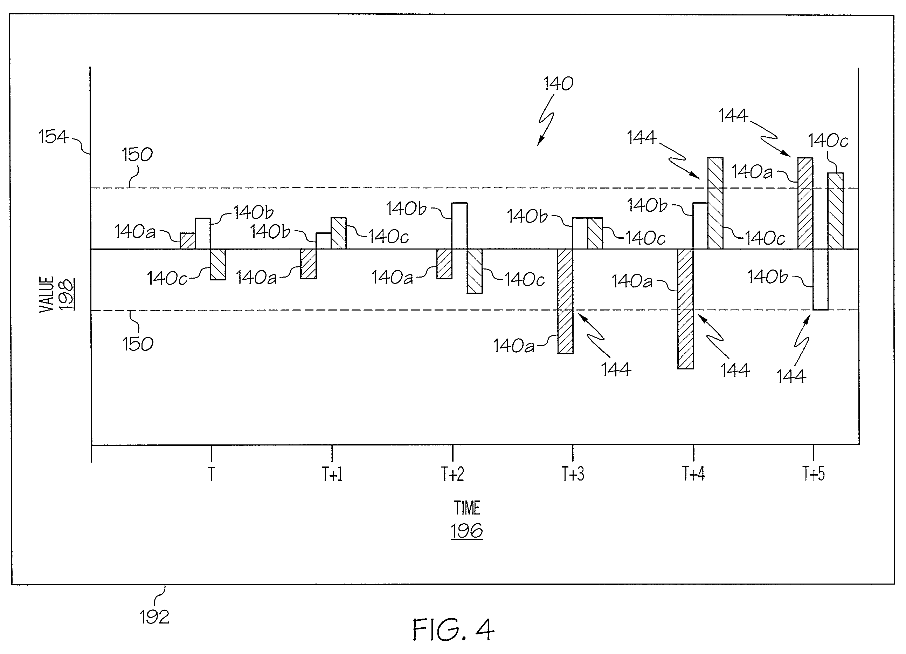

In one example implementation, cross-correlations 140 (Fig. 2) may be expressed as numerical value 198 (e.g., correlation value 154) (Fig. 4) that represents the strength of the temporal correlation or relationship (e.g., a similarity or dependence as a function of time) of schedule interruption data 124 to one of, or each one of, delay risk data 128, deferral risk data 128, deferral data 130, and dispatch reliability data 132 (Fig. 1). As one example, correlation value 154 may be a numerical value between zero (0), for example, representing no relationship or correlation between the cross-correlated input data 120 (Fig. 2), and one (1), for example, representing a direct (e.g., one-to-one) relationship or correlation between the cross-correlated input data 120.

As one example, correlation value 154 of schedule interruption to delay risk indicates a ratio between a change in delay risk value 208 and a correlated change in schedule interruption value 200. As one example, correlation value 154 of schedule interruption to deferral risk indicates a ratio between a change in deferral risk value 202 and a correlated change in schedule interruption value 200. As one example, correlation value 154 of schedule interruption to deferral indicates a ratio between a change in deferral value 204 and a correlated change in schedule interruption value 200. As one example, correlation value 154 of schedule interruption to dispatch reliability indicates a ratio between a change in dispatch reliability value 206 and a correlated change in schedule interruption value 200.

Referring to Fig. 2, as one example, schedule interruption prediction module 134 further includes data trend analysis module 142. Data trend analysis module 142 computes statistically significant probability of a schedule interruption 144 based on cross-correlations 140 and trend 146 of at least one of delay risk data 126, deferral risk data 128, deferral data 130, and dispatch reliability data 132 projected over a predetermined time period into the future.

Generally, the strength of a correlation is measured from historical data (e.g., tracked data 152), and is thus only an estimate of a true correlation. As one non-limiting example, a desired confidence level is set, for example, a confident level of approximately ninety-five (95) percent. From the confident level and the historical data, a confidence interval is computed. When the estimated strength of correlation falls within the confident interval, then there is a ninety-five (95) percent confident that the confident interval contains the true correlation. In other words, there is a ninety-five (95) percent chance that the estimated strength of correlation is not just due to noise or coincidences in the historical data.

As one example, data trend analysis module 142 may also include rules that govern which auto-correlation 148 of delay risk data 128, deferral risk data 128, deferral data 130, or dispatch reliability data 132 will be selected to compute trend 146 and for what time period into the future to project trend 146. Data trend analysis module 142 may also include algorithms used to compute trend 146 and/or statistically significant probability of a schedule interruption 144. As one example, schedule interruption prediction module 134 or data trend analysis module 142 may include a rules module (not explicitly illustrated) configured to store and apply the rules and/or algorithms utilized to compute trend 146 and/or statistically significant probability of a schedule interruption 144.

As one example, data trend analysis module 142 computes trend 146 for at least one of delay risk data 126, deferral risk data 128, deferral data 130, and dispatch reliability data 132 based on auto-correlations 148 of delay risk data 126, deferral risk data 128, deferral data 130, and dispatch reliability data 132. Trend 146 is a projection of at least one of delay risk data 126, deferral risk data 128, deferral data 130, and dispatch reliability data 132 into the future. Data trend analysis module 142 computes future values for at least one of delay risk data 126, deferral risk data 128, deferral data 130, and dispatch reliability data 132 based from auto-correlations 148 of delay risk data 126, deferral risk data 128, deferral data 130, and dispatch reliability data 132. In other words, data trend analysis module 142 is configured to project (e.g., predict) delay risk value 208, deferral risk value 202, deferral value 204, and dispatch reliability value 206 for the predetermined time period into the future by extrapolating tracked data 152 based on auto-correlations 148 of delay risk data 128, deferral risk data 128, deferral data 130, or dispatch reliability data 132.

Referring to Fig. 4, and with reference to Figs. 1-3, as one example, statistically significant probability of a schedule interruption 144 (Fig. 2) may be displayed graphically by display module 88 (Fig. 1), for example, on display 192. As one example, display 192 may include field for cross-correlations 140, a field for values 198 (e.g., correlation values 154), a field for time 196, and a field for significance threshold 150.

As one example, statistically significant probability of a schedule interruption 144 (Fig. 2) occurs when cross-correlation 140 (Fig. 2) meets or exceeds a predetermined significance threshold 150 (Fig. 4). Data trend analysis module 142 (Fig. 2) is configured to compare cross-correlation 140 to significance threshold 150 at different times into the future based on trend 146 (e.g., during the predetermined time period into the future represented from time T to Time T+5) to identify statistically significant probability of a schedule interruption 144 at one or more times during the predetermined time period into the future.

In one example implementation, data tracking module 136 tracks tracked data 152 (e.g., schedule interruption data 124, delay risk data 128, deferral risk data 128, deferral data 130, or dispatch reliability data 132). Data correlation module 138 cross-correlates tracked data 152 (e.g., schedule interruption data 124 with each one of delay risk data 128, deferral risk data 128, deferral data 130, or dispatch reliability data 132). Cross-correlation 140 of tracked data 152 may indicate that when any one of delay risk, deferral risk, deferrals, or dispatch reliability reached a certain level at a given time (e.g., on a given day), a schedule interruption occurred. In other words, cross-correlation 140 may indicate that a prior increase in one or more of delay risk value 208, deferral risk value 202, deferral value 204, or dispatch reliability value 206 was accompanied by, indicative of, or strongly correlated to an increase in schedule interruption value 200. Correlation value 154 of cross-correlation 140 of tracked data 152 may be a measure of the strength of the relationship between the increase in any one of delay risk value 208, deferral risk value 202, deferral value 204, or dispatch reliability value 206 to the increase in schedule interruption value 200.

Data correlation module 138 auto-correlates each one of delay risk data 128, deferral risk data 128, deferral data 130, or dispatch reliability data 132. Auto-correlation 148 of delay risk data 128, deferral risk data 128, deferral data 130, or dispatch reliability data 132 may indicate that a prior change in delay risk value 208, deferral risk value 202, deferral value 204, or dispatch reliability value 206. Auto-correlations 148 are used to compute trend 146.

Data trend analysis module 142 computes trend 146 to project at least one of or each one of delay risk data 128, deferral risk data 128, deferral data 130, or dispatch reliability data 132 into the future for the predetermined period of time, for example, from time T to time T+5 (Fig. 4). While not explicitly illustrated, trend 146 may also be displayed graphically by display module 188 (Fig. 1), for example, on display 192.

In the example implementation illustrated in Fig. 4, first cross-correlations 140a (e.g., of schedule interruption data 124 and deferral risk data 128), second cross-correlations 140b (e.g., of schedule interruption data 124 and dispatch reliability data 132), and third cross-correlations 140c (e.g., of schedule interruption data 124 and delay risk data 126) are displayed at predetermined time intervals over a time period into the future based on trend 146. While not explicitly illustrated, other cross-correlations 140 (of schedule interruption data 124 and deferral data 130) may also be graphically displayed. Time period into the future is represented by time T to time T+5. Time T represents the present day (e.g., today). Times T+1, T+2, T+3, T+4, and T+5 represent future time intervals, for example, in days (e.g., T+1 is tomorrow, T+2 is two days from today, etc.) As one example, display 192 illustrated in Fig. 4 is a five (5) day view into the future of cross-correlations 140.

Significance threshold 150 represents when cross-correlation 140 becomes statistically significant, and, thus, indicative of a schedule interruption (e.g., statistically significant probability of a schedule interruption 144). As one example, significance threshold 150 may be expressed as a numerical value that represents the point where correlation value 154 is statistically significant.

In the illustrated implementation, data trend analysis module 142 (Fig. 2) computes that first cross-correlation 140a (e.g., correlation value 154 of first cross-correlation 140a) is statistically significant when deferral risk value 202 (Fig. 3) increases to a value projected to occur at time T+3 (e.g., in three (3) days) based on trend 146 of deferral risk data 128. Accordingly, data trend analysis module 142 indicates, and graphically displays, that there is a statistically significant chance that a schedule interruption (e.g., statistically significant probability of a schedule interruption 144) (Fig. 2) will occur in three (3) days based on the current trend of the deferral risk. Therefore, mitigation efforts may be made to reduce the deferral risk and, thus, avoid or decrease the chance of a potential schedule interruption.

Similarly, data trend analysis module 142 (Fig. 2) computes that third cross-correlation 140c (e.g., correlation value 154 of first cross-correlation 140a) is statistically significant when delay risk value 208 (Fig. 3) increases to a value projected to occur at time T+4 (e.g., in four (4) days) based on trend 146 of delay risk data 126. Accordingly, data trend analysis module 142 indicates, and graphically displays, that there is a statistically significant chance that a schedule interruption (e.g., statistically significant probability of a schedule interruption 144) (Fig. 2) will occur in four (4) days based on the current trend of the delay risk. Therefore, mitigation efforts may be made to reduce the delay risk and, thus, avoid or decrease the chance of a potential schedule interruption.

Accordingly, schedule interruption prediction module 134 generally and data trend analysis module 142 specifically is configured to quantify a future impact of present states of condition for equipment 118, platform 108, and/or fleet 266 (Fig. 1). In other words, schedule interruption prediction module 134 is configured to correlate the data indicative of a schedule interruption in past to the probability of a schedule interruption occurring in future. As one example, current data values may be trending to a value where previous data values lead to (e.g., were strongly correlated with) a schedule interruption. Following an indication that there is a statistically significant chance of a schedule interruption occurring, various risk based decision and/or actions may be taken to reduce the risk of the schedule interruption.

Referring to Fig. 2, and with reference to Fig. 1, as expressed above, schedule interruption data 124 may include a quantification of schedule interruptions of fleet 266 and/or individual platforms 108 (Fig. 1). A schedule interruption may be the result of a fault in equipment 118 (Fig. 1) of platform 108 and/or a maintenance event (e.g., an unscheduled maintenance event), for example, due to a fault in equipment 118 of platform 108.

In one example implementation, schedule interruption value 200 (Fig. 3) may be expressed as the total time (e.g., in minutes) of all schedule interruptions occurring at a fixed point in time (e.g., on a particular day). As one example, if a particular platform 108 encounters two (2) schedule interruptions on a particular day, each schedule interruption lasting ten (10) minutes, schedule interruption value 200 for that platform 108 would be expressed as twenty (20) minutes. As another example, if ten (10) platforms 108 of fleet 266 each encounter one (1) schedule interruption, each schedule interruption lasting ten (10) minutes, schedule interruption value 200 for fleet 266 would be expressed as one hundred (100) minutes. In one example implementation, schedule interruption value 200 may be expressed as the total number of all schedule interruptions, for example, per platform 108 or per fleet 266, occurring at a fixed point in time (e.g., on a particular day).

Schedule interruption data 124 may be monitored and/or stored in data sources 122. As one example, schedule interruption data 124 may be stored in schedule module 156 (Fig. 1). As one example, schedule interruption data 124 may be stored in database module 158 of platform management apparatus 104. As one example, schedule interruption data 124 may be stored in external database module 180.

Referring to Fig. 2, and with reference to Fig. 1, as expressed above, deferral risk data 128 may include a quantification of risk, for example, related to potential schedule interruptions, resulting from maintenance deferrals of platforms 108 (Fig. 1).

A maintenance deferral may be an authorized deferral of repair of a fault in equipment 118. As one example, after a fault is generated or triggered, a minimum equipment list ("MEL") document 170 (Fig. 3) may be accessed to determine if the maintenance for repairing the fault is deferrable. A fault may be generated automatically, for example, via fault monitoring systems of platform 108. Alternatively, a fault may be generated based on visual recognition of the fault, for example, by operator 116.

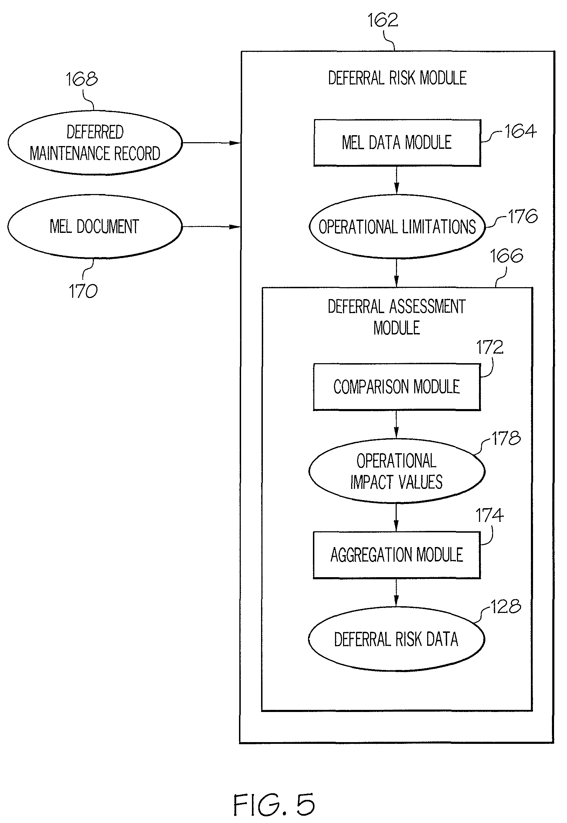

Referring to Fig. 5, and with reference to Fig. 1, the MEL document 170 may be either a physical or an electronic text-based document that contains a list of MEL items. Each MEL item includes a fault, an item identifier identifying the MEL item, such as a number, and operational limitations associated with the fault. Each MEL item or fault listed in the MEL document 170 corresponds with particular equipment 118 (Fig. 1) of platform 108 (Fig. 1) that may be inoperative as long as the provided operational limitations associated with the fault are met. The operational limitations include conditions and restrictions that must be met in order to defer maintenance of the fault. If the fault is listed in the MEL document 170 and the operational limitations are met, maintenance for correcting or repairing the fault can be deferred.

After a decision to defer maintenance occurs, a deferred maintenance entry process includes performing any actions necessary to accommodate the limitations in the MEL document 170 corresponding with deferral of maintenance. After the necessary actions are performed, the deferral process includes creating deferred maintenance record 168, for example, based on information entered by operators 116 (Fig. 1) associated with platform 108 (Fig. 1), which may be stored, for example, in maintenance module 114 (Fig. 1). Platform system 102 (Fig. 1) may utilize deferred maintenance records 168 to track and monitor maintenance deferrals of one, some, or all platforms 108 of fleet 266 (Fig. 1).

Referring to Fig. 5, and with reference to Fig. 1, as one example, platform management apparatus 104 (Fig. 1) also includes deferral risk module 162. As one example, deferral risk module 162 includes MEL data module 164 and deferral assessment module 166. Deferral risk data 128 may be computed by deferral risk module 162. Deferral risk module 162 obtains information regarding deferred maintenance events, determines operational limitations associated with the deferred maintenance events, and determines deferral impacts associated with the deferred maintenance events based on the operational limitations. As used herein, deferral impacts associated with deferred maintenance events may include actual operational impacts or the probability of operational impacts resulting from a maintenance deferral.

In one example implementation, data query module 160 accesses deferred maintenance records 168 and determines MEL items from deferred maintenance records 168. Data query module 160 may communicate with maintenance module 114 over data network 106 using any of various electronic communication protocols. As one example, data query module 160 constructs a query to extract selected deferred maintenance records 168 from maintenance module 114 related to fleet 266, individual platforms 108, and/or particular equipment 118. Access to deferred maintenance records 168 may include storing a local copy of the selected deferred maintenance records 168 in memory of the data query module 160 specifically or the platform management apparatus 104 generally.

While the disclosed examples illustrate a general data query module (e.g., data query module 160) of platform management apparatus 104 configured to query maintenance module 114 and provide deferred maintenance records 168 and/or MEL documents 170 to deferral risk module 162, in other examples, deferral risk module 162 may include its own data query module (not explicitly illustrated).

Each deferred maintenance record 168 accessed by the data query module 160 is associated with and includes a single MEL item corresponding with a single deferred maintenance action. Additionally, deferred maintenance record 168 may include an MEL document identifier identifying MEL document 170 in which the MEL item is located. Data query module 160 may be further configured to determine the MEL item, which can be in the form of an MEL item identifier, from each deferred maintenance record 168.

In one example implementation, the MEL item or MEL item identifier determined by data query module 160 is utilized by MEL data module 164 to locate MEL items in MEL document 170. As one example, MEL data module 164 may include an item identification module (not explicitly illustrated) that locates the MEL item in MEL document 170 based on the MEL item identifier. After the item identification module locates the MEL item in MEL document 170, a limitation module (not explicitly illustrated) may determine operational limitations 176 associated with (e.g., categorized or grouped with) the MEL item.

As one example, MEL data module 164 may include an impact categorization module (not explicitly illustrated) that categorizes operational limitations 176 into one of a plurality of impact categories. The impact categorization module may categorize operational limitations 176 in this manner before operational limitations 176 are utilized by deferral assessment module 166. Therefore, in some implementations, categorized operational limitations 176 may be generated by MEL data module 164 and utilized by deferral assessment module 166.

The plurality of impact categories may include any of various categories that may be impacted by the deferral of maintenance. In one example implementation, the plurality of impact categories may include two or more of maintenance impact, operational impact, crew impact, passenger impact, economic impact, and/or other impacts. As expressed above, deferral impact may include the probability of operational risks associated with the operation of platform 108 (Fig. 1) resulting from a maintenance deferral. The impact categorization module may categorize some of operational limitations 176 into one impact category and categorizes other operational limitations into another category or one operational limitation may be categorized into multiple impact categories.

As one example, deferral assessment module 166 includes comparison module 172 and aggregation module 174. Comparison module 172 may compare operational limitations 176 from MEL data module 164 to predetermined impact factors to determine if, or to what degree, the predetermined impact factors are met by operational limitations 176. Then, based on the comparison, comparison module 172 assigns operational impact value 178 to each of the predetermined impact factors. Operational impact value 178 may be associated with a probability of an impact to operation of platform 108 (Fig. 1). In some implementations, a predetermined impact factor is either met or not met by operational limitations 176. Therefore, in such implementations, comparison module 172 may assign either one or another operational impact value 178 (e.g., "yes" or "no", or "0" or "1"). However, in other implementations, a predetermined impact factor can be met by various degrees. Therefore, in these implementations, comparison module 172 may assign operational impact value 178 corresponding with the degree by which the predetermined impact factor can be met (e.g., "1", "2", or "3", or "low", "medium", or "high").

As one example, aggregation module 174 of deferral assessment module 166 aggregates (e.g., combines, sums, averages, etc.) operational impact values 178 assigned to each predetermined impact factor. Then, aggregation module 174 compares an aggregated operational impact value (not explicitly illustrated) to at least one aggregated operational impact value threshold (not explicitly illustrated). The aggregated operational impact value may be associated with a probability of impacts. Based on whether the aggregated operational impact value meets the at least one aggregated operational impact value threshold, aggregation module 174 determines deferral risk data 128 (e.g., the operational impact). In this manner, deferral risk data 128 represents an aggregation of operational impact values 178 assigned to each of the plurality of operational limitations 176 or corresponding predetermined impact factors. According to some implementations, the aggregated operational impact value may be compared to a plurality of aggregated operational impact value thresholds each associated with a different operational impact.

In one example implementation, deferral risk data 128 may represent a single operational impact associated with platform 108 (Fig. 1) as a whole. In one example implementation, deferral risk data 128 may include multiple operational impacts each associated with a respective one of the plurality of operational impact categories. In such implementations, aggregation module 174 may separately aggregate operational impact values 178 assigned to each predetermined impact factor for each operational impact category. Accordingly, each operational impact category will be assigned a separate aggregated operational impact value and associated operational impact by aggregation module 174. Then, if desired, aggregation module 174 may aggregate the aggregated operational impact values of the operational impact categories, and compare the resultant operational impact value 178 to one or more predetermined thresholds, to determine an overall operational impact (e.g., deferral risk) of platform 108 (Fig. 1), in other words, to compute deferral risk data 128. In a similar manner, aggregation module 174 may aggregate multiple overall operational impact values 178 each associated with one of multiple platforms 108 of fleet 266 (Fig. 1), and compare the resultant operational impact value 178 to one or more predetermined thresholds, to determine an overall operational impact of fleet 266, in other words, to compute deferral risk data 128.

While not explicitly illustrated, individual operational impact values 178, operational impact categories, and/or deferral risk data 128 associated with equipment 118, platforms 108, and/or fleet 266 (Fig. 1) may be displayed graphically, for example, by display module 188 (Fig. 1) of platform management apparatus 104 (Fig. 1).

Deferral risk data 128 generated by deferral risk module 162 may be stored in data source 122. As one example, deferral risk data 128 may be stored in database module 158 of platform management apparatus 104. As one example, deferral risk data 128 may be stored in a database module (not explicitly illustrated) of deferral risk module 162. As one example, deferral risk data 128 may be stored in external database module 180.

In certain implementations, examples of the manner in which deferral risk data 128 is be generated and/or provided is described in greater detail in U.S. Patent Application No. 14/463,540, filed on August 19, 2014, and entitled *Deferred Aircraft Maintenance Impact Assessment Apparatus*, *System, and Method*.

Referring to Fig. 2, as expressed above, deferral data 130 may include a quantification of the maintenance deferrals of platforms 108 (Fig. 1). As one example, deferral data 130 may be stored in and retrieved from maintenance module 114 (Fig. 1).

Referring to Fig. 2, and with reference to Fig. 1, as expressed above, dispatch reliability data 132 may include a quantification of dispatch reliability of platform 108 (Fig. 1) and/or fleet 266 (Fig. 1), for example, due to a maintenance event (e.g., an unscheduled maintenance event) based on a probability of a fault in equipment 118 (Fig. 1) occurring into the future. Dispatch reliability may be the probable schedule reliability of platform 108 into the future or a prediction of platform 108 departing on schedule (e.g., as planned).

In one example implementation, dispatch reliability data 132 may be expressed as a percentage. As one example, dispatch reliability data 132 may be expressed as a percentage of departures where platform 108 departs on schedule projected into the future. As one example, dispatch reliability data 132 may be expressed as a percentage of operations (e.g., maneuvers, trips, routes, missions, etc.) without a schedule interruption projected into the future.

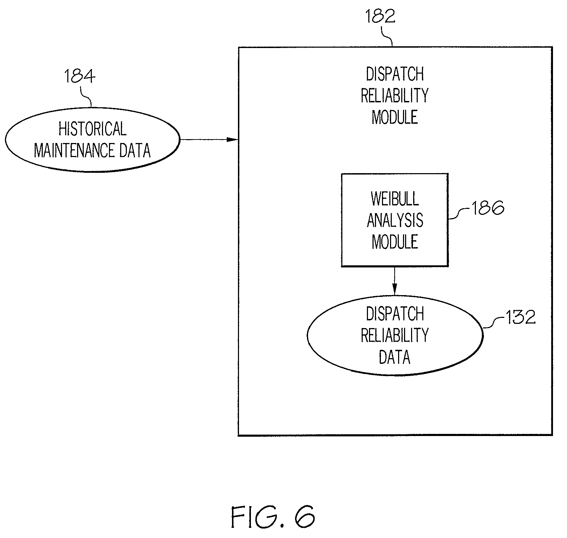

Referring to Fig. 6, and with reference to Fig. 1, as one example, platform management apparatus 104 (Fig. 1) further includes dispatch reliability module 182. Generally, dispatch reliability module 182 computes dispatch reliability data 132 by analyzing platform reliability from historical maintenance data 184 that has been collected and stored, for example, in data sources 122 (e.g., maintenance module 114, database module 158, or external database module 180). Generally, dispatch reliability module 182 analyzes historical maintenance data 184 and determines the overall reliability (e.g., dispatch reliability) for platform 108 (Fig. 1) and/or fleet 266 (Fig. 1), expressed as dispatch reliability data 132. Thus, as one example, the analysis results indicate individual platforms 108 that may be mission critical (e.g., on the verge of equipment failure) or that may be borderline operational (e.g., on the verge of becoming mission critical).

As one example, historical maintenance data 184 may be queried, for example, by data query module 160 from maintenance module 114 and/or external database module 180. The historical maintenance data may include maintenance event data for equipment 118, platform 108, and/or fleet 266, and equipment data (e.g., equipment failure data and/or equipment replacement data) for each platform 108 or for fleet 266.

While the disclosed examples illustrate a general data query module (e.g., data query module 160) of platform management apparatus 104 configured to query, for example, maintenance module 114, and provide historical maintenance data 184 to dispatch reliability module 182, in other examples, dispatch reliability module 182 may include its own data query module (not explicitly illustrated).

As one example, dispatch reliability module 182 includes Weibull analysis module 186. In one example implementation, Weibull analysis module 186 subjects historical maintenance data 184 (e.g., the maintenance event data and equipment data) to a Weibull analysis. Optionally, dispatch reliability module 182 may include a data sifting and cleaning module (not explicitly illustrated) that sifts and/or cleans historical maintenance data 184 prior to the Weibull analysis.

Generally, Weibull analysis module 186 generates Weibull curves for individual platforms 108 (Fig. 1) and/or for individual equipment 118 (Fig. 1) utilizing the Weibull analysis. So essentially, the Weibull analysis produces a survival function for each platform 108 and equipment 118 of each platform 108, for example, selected in the query step. Each platform 108 or fleet 266 is mapped onto the Weibull curves to provide a predicted unscheduled maintenance event for each platform 108 and a predicted failure of each equipment 118, for example, over a given time window, for example, over a given number of operational days, over a given number of operational (e.g., flight) hours, or the like.

Thus, the Weibull analysis may reflect the health of each individual platform 108 and/or of equipment 118 of each platform 108 and/or quantify expected faults (e.g., the probability of a fault) of equipment 118 resulting in a schedule interruption due to an unscheduled maintenance event over the given time window. As one example, the Weibull analysis may be based on time in service data for particular equipment 118, such as a LRU (e.g., a heat exchanger), of a plurality of platforms 108. The Weibull curves indicate the Weibull distribution for equipment 118 and a lower limit of confidence system level (e.g., a 95% confidence level) of equipment 118 surviving for a predetermined time interval (e.g., the next one hundred (100) operational hours, the next six (6) operational days, etc.) beyond its current usage. Fleet 266 health can be measured by plotting individual platforms 108 along the Weibull curves survival function. The points on the Weibull curves representing individual platforms 108 indicate the likelihood of equipment 118 failing in each corresponding platform 108 within the predetermined time interval.

So, once conditional lifetimes are determined and plotted on the Weibull curves for equipment 118, the Weibull curves provide platform 108 survival intervals that have been derived from analysis of historic failures and current part in service times (e.g., historical maintenance data 184). From the Weibull analysis, Weibull analysis module 186 generates dispatch reliability data 132.

The Weibull curves are survival curves that may graphically present detailed information on a particular level of conditional life expectancy, for example, conditioned on the current age, of particular equipment 118 on a particular platform 108. While not explicitly illustrated, the Weibull curves and dispatch reliability data 132 may be displayed graphically by display module 188 of platform management apparatus 104 (Fig. 1).

Dispatch reliability data 132 generated by dispatch reliability module 182 may be stored in data source 122. As one example, dispatch reliability data 132 may be stored in database module 158 of platform management apparatus 104. As one example, dispatch reliability data 132 may be stored in a database module (not explicitly illustrated) of dispatch reliability module 182. As one example, dispatch reliability data 132 may be stored in external database module 180.

In certain implementations, the manner in which dispatch reliability data 132 may be generated and/or provided is described in greater detail in U.S. Patent 7,860,618 to Brandstetter et al., entitled *System, Method and Program for Predicting Fleet Reliability and Maintaining a Fleet of Vehicles.*

Referring to Fig. 2, and with reference to Fig. 1, as expressed above, delay risk data 126 may include a quantification of risk related to potential schedule interruptions of fleet 266 (Fig. 1) and/or individual platforms 108 (Fig. 1), for example, due to unscheduled maintenance events. As one example, delay risk is the risk associated with a fault in equipment 118 (Fig. 1) resulting in a delay (e.g., a schedule interruption) of platform 108. In other words, delay risk is a forward projection of the risk related to a potential schedule interruption of platform 108 and/or potential schedule disruptions of fleet 266.

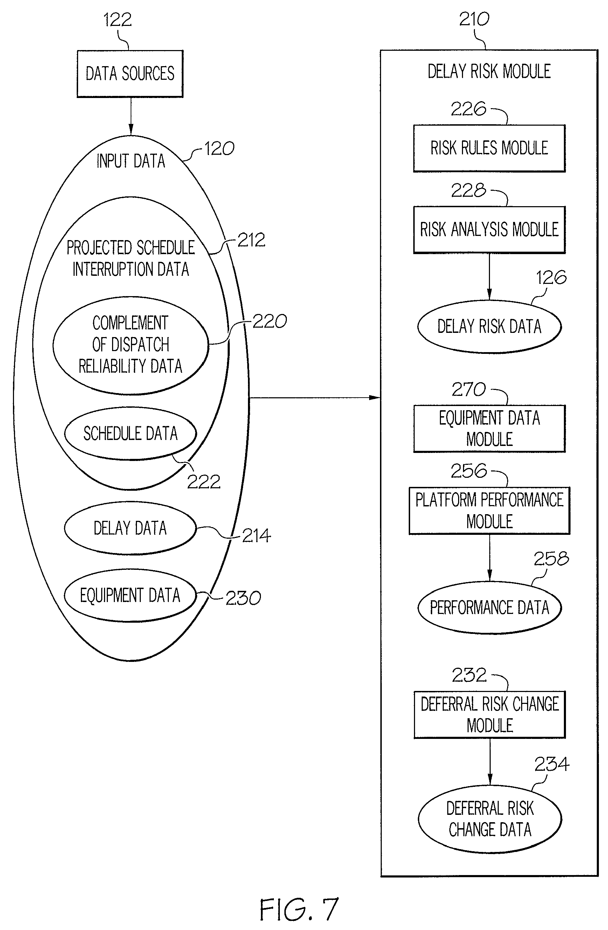

Referring to Fig. 7, and with reference to Fig. 1, as one example, platform maintenance apparatus 104 (Fig. 1) also includes delay risk module 210. Delay risk module 210 computes delay risk data 126. Delay risk module 210 receives input data 120 from data sources 122, for example, via data query module 160 (Fig. 1) over data network 106 (Fig. 1). As one example, input data 122 includes projected schedule interruption data 212 and delay data 214.

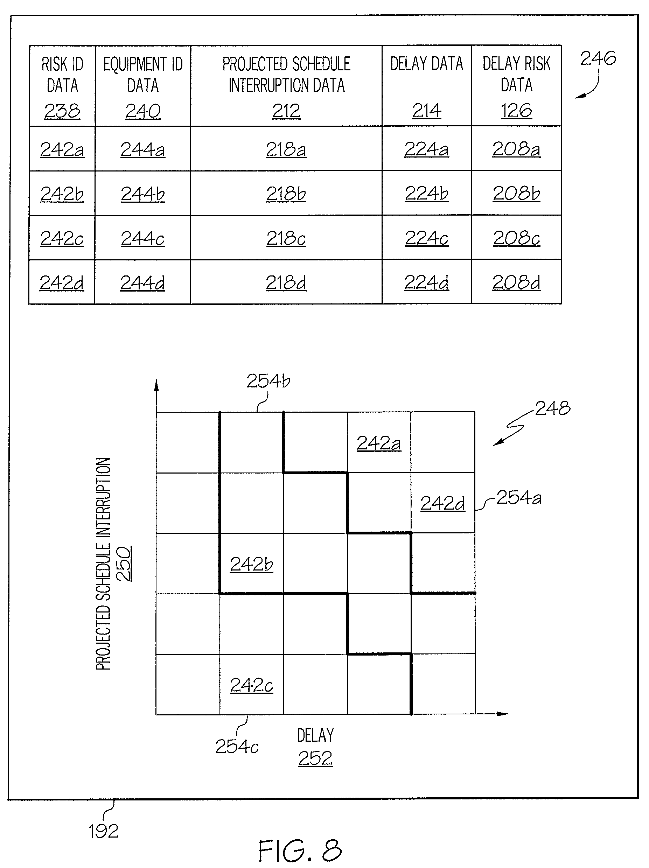

As one example, projected schedule interruption data 212 includes a quantification of the probability of a schedule interruption of platform 108 (Fig. 1) and/or fleet 266 (Fig. 1) occurring into the future. In one example implementation, projected schedule interruption data 212 may be expressed as a numerical value (e.g., projected schedule interruption value 218) (Fig. 8) representing the predicted number of schedule interruptions per platform 108 and/or per fleet 266. As one example, projected schedule interruption data 212 is a combination of complement of dispatch reliability data 220 and schedule data 222.

In one example implementation, complement of dispatch reliability data 220 may be expressed as a numerical value (e.g., a complement value) (not explicitly illustrated) representing the probability of platform 108 (Fig. 1) or fleet 266 (Fig. 1) experiencing a schedule interruption and not remaining on schedule (e.g., the complement of dispatch reliability value 206) (Fig. 3). As one example, when dispatch reliability value 206 is expressed as a decimal number (e.g., 0.98), the complement value is one (1) minus the decimal number (e.g., 1 - 0.98). As one example, when dispatch reliability value 206 is expressed as a percentage (e.g., 98%), the complement value is one hundred (100) percent minus the percentage (e.g., 100% - 98%). Complement of dispatch reliability data 220 may be stored in data source 122 (e.g., database module 158 or external database module 180) and extracted, for example, by data query module 160. Alternatively, delay risk module 210 may extract dispatch reliability data 132 (Fig. 2), for example, from data source 122 via data query module 160 (Fig. 1), and compute complement of dispatch reliability data 220.

In one example implementation, schedule data 222 may be expressed as a numerical value (e.g., a schedule value) (not explicitly illustrated). As one example, the schedule value represents the number of operations (e.g., maneuvers, trips, routes, missions, etc.) of platform 108 (Fig. 1) and/or fleet 266 (Fig. 1) scheduled into the future (e.g., tomorrow, for three (3), for one (1) week, etc.) As one example, the schedule value represents the total time of operations of platform 108 and/or fleet 266 scheduled into the future. Schedule data 222 may be stored in data source 122 (e.g., schedule module 156, database module 158, or external database module 180) and extracted, for example, by data query module 160.

As one example, projected schedule interruption value 218 (Fig. 8) is the product of the complement value and the schedule value. In one example implementation, projected schedule interruption value 218 represents the total number of projected schedule interruptions, for example, of platform 108 (Fig. 1) or fleet 266 (Fig. 1) predicted or projected over a predetermined time into the future based on the probability of experiencing a schedule interruption (e.g., complement of dispatch reliability data 220) and the total number of operations (e.g., schedule data 222).

In one example implementation, projected schedule interruption data 212 is extracted and provided to delay risk module 210. Alternatively, in one example implementation, complement of dispatch reliability data 220 and schedule data 222 are extracted and provided to delay risk module 210 and delay risk module 210 computes projected schedule interruption data 212.

As one example, delay data 214 includes a quantification of delay time due to a schedule interruption, for example, based on a fault of equipment 118 (Fig. 1). In one example implementation, delay data 214 may be expressed as a numerical value (e.g., delay value 224) (Fig. 8) the average (e.g., a historical average) delay time, for example, in minutes, corresponding to a prior schedule interruptions due to unscheduled maintenance events resulting from a fault in particular equipment 118. Delay data 214 may be stored in data source 122 (e.g., schedule module 156, maintenance module 114, database module 158, or external database module 180) (Fig. 1) and extracted, for example, by data query module 160.

While the disclosed examples illustrate a general data query module (e.g., data query module 160) of platform management apparatus 104 configured to query, for example, data sources 122, and provide input data 120 (e.g., complement of dispatch reliability data 220, or dispatch reliability data 132, schedule data 222, and delay data 214) to delay risk module 210, in other examples, delay risk module 210 may include its own data query module (not explicitly illustrated).

As one example, delay risk module 210 includes risk rules module 226. Risk rules module 226 includes rules (e.g., business rules) that govern the selection and utilization of input data 120 (e.g., projected schedule interruption data 212 and delay data 214) and determination of the predetermined time period into the future in which the delay risk will be computed. Risk rules module 226 also includes algorithms used to compute delay risk value 208 from input data 120.

As one example, delay risk module 210 also includes risk analysis module 228. Risk analysis module 228 applies the rules and/or algorithms to compute delay risk value 208. Delay risk values 208 may be stored, for example, in database module 158, as delay risk data 126 (Fig. 2).

Thus, delay risk data 126, expressed as delay risk value 208 (Fig. 3), represents the probability of a maintenance related schedule interruption (e.g., an unscheduled maintenance event), for example, due to a fault in equipment 118 (Fig. 1) and the impact (e.g., total delay) of the maintenance related schedule interruption. In one example implementation, delay risk value 208 may be computed as a product of projected schedule interruption value 218 and delay value 224. As one example, delay risk value 208 is a computational product of projected schedule interruption value 218 and delay value 224 (e.g., projected schedule interruption value 218 multiplied by delay value 224).

Accordingly, delay risk module 210 is configured to correlate the probability or likelihood of a schedule interruption and the impact or consequence of the schedule interruption as a delay risk and compute delay risk value 208 corresponding to the delay risk conditioned upon particular equipment 118 (Fig. 1), platforms 108 (Fig. 1), and/or fleet 266 (Fig. 1).

As expressed above, delay risk data 126 is used by schedule interruption prediction module 134 (Fig. 2) to compute statistically significant probability of a schedule interruption 144 (Fig. 2).

In one example implementation, risk analysis module 228 is also configured to compute delay risk value 208 to represent a financial risk, for example, to platform system 102 (Fig. 1) based on the predicted schedule interruptions of platform 108 (Fig. 1) or fleet 266 (Fig. 1). In such an implementation, delay risk value 208 may be computed as a product of projected schedule interruption value 218, delay value 224, and a cost value (not expressly illustrated). The cost value may represent the financial cost or loss associated with the time of delay. Accordingly, in certain implementations, the cost value may be a function of delay data 214.

As one example, delay risk module 210 also includes equipment data module 270. Equipment data module 270 associates projected schedule interruption data 212, delay data 214, and computed delay risk data 128 with particular corresponding equipment 118, a fault of which may result in the schedule interruption.

In one example implementation, input data 120 also include equipment data 230. Equipment data 230 may include information related to some or all equipment 118 (Fig. 1) of platforms 108 (Fig. 1) of fleet 266 (Fig. 1). As examples, equipment data 230 may includes one or more identifiers (e.g., name, number, code, etc.) of equipment 118, the flight deck effect of a fault in equipment 118, service bulletins related to a fault in equipment 118, and the like.

As one example, delay risk module 210 also includes deferral risk change module 232. Deferral risk change module 232 computes deferral risk change data 234 associated with a maintenance deferral of the fault in equipment 118 (Fig. 1) that may lead to the projected schedule interruption. As one example, deferral risk change data 234 is expressed as a numerical value (e.g., a deferral risk change value) (not explicitly illustrated) representing a change in deferral risk value 202 (Fig. 3), for example, computed by deferral risk module 162, when additional equipment 118 or platforms 108 (Fig. 1) are included in the computation of deferral risk value 202. In one example implementation, the deferral risk change value is expressed as a percent change in deferral risk value 202 when platform 108 projected to encounter a schedule interruption due to a fault in equipment 118 receives a maintenance deferral.

Referring to Fig. 8, and with reference to Fig. 1, as one example, delay risk data 126, projected schedule interruption data 212, delay data 214, and equipment data 230 may be displayed graphically by display module 188 (Fig. 1), for example, on display 192.

In one example implementation, display 192 includes table 246 (e.g., column and row format). As one example, table 246 may include a field for risk identification ("ID") data 238, a field for equipment identification ("ID") data 240, a field for projected schedule interruption data 212, a field for delay data 214, a field for delay risk data 126. Optionally, display 192 may include other fields for various other data, for example, deferral risk change data 234 (not explicitly illustrated).

In one example implementation, risk ID data 238 is expressed a numerical value (e.g., risk ID value 242) corresponding to particular equipment 118 (Fig. 1) for which delay risk value 208 was computed. As one example, risk ID values 242 (individually identified as 242a, 242b, 242c, 242d) are numbers in ascending order (e.g., 1, 2, 3, 4, etc.).

In one example implementation, equipment identification ("ID") data 240 is expressed as a name, number, code, etc. (e.g., equipment ID value 244) identifying particular equipment 118 for which delay risk value 208 was computed. As one example, equipment ID values 244 (individually identified as 244a, 244b, 244c, 244d) are the names of the particular equipment 118.

In one example implementation, projected schedule interruption data 212 is expressed as projected schedule interruption value 218 for particular equipment 118 used to compute delay risk value 208. As one example, and as expressed above, projected schedule interruption values 218 (identified individually as 218a, 218b, 218c, 218d) are the total number of projected schedule interruptions due to a fault in the particular equipment 118.

In one example implementation, delay data 214 is expressed as delay value 224 for particular equipment 118 used to compute delay risk value 208. As one example, and as expressed above, delay values 224 (identified individually as 224a, 224b, 224c, 224d) are the average time delays associated with maintenance events due to a fault in the particular equipment 118.

In one example implementation, delay risk data 126 is expressed as delay risk value 208 for particular equipment 118. As one example, and as expressed above, delay risk values 208 (identified individually as 208a, 208b, 208c, 208d) are the numerical values representing the probability of a schedule interruption and the total delay from the schedule interruption due to a fault in the particular equipment 118.

While only four (4) different equipment 118 (Fig. 1) are illustrated in the example display 192 of Fig. 8, any total number of equipment 118 may be displayed. As one example, all equipment 118 of a certain platform 108 (Fig. 1), a certain type of platform 108, or of all platforms 108 of fleet 266 (Fig. 1) may be graphically displayed.

Accordingly, in one example implementation, projected schedule interruption data 212, delay data 214 and delay risk data 126 represent equipment 118 (Fig. 1) on a particular platform 108 (Fig. 1), in other words, display 192 represents a platform-level view. In one example implementation, projected schedule interruption data 212, delay data 214 and delay risk data 126 represent equipment 118 on all platforms 108 of fleet 266 (Fig. 1), in other words, display 192 represents a fleet-level view.

In one example implementation, display 192 also includes risk matrix 248. As one example, risk matrix 248 is defined by projected schedule interruption 250 (e.g., risk likelihood) and delay 252 (e.g., risk consequence). Risk matrix 248 is divided into regions to categorize delay risk based upon projected schedule interruption 250 and delay 252. As one example, region 254a represents a severe delay risk (e.g., delay risk value 208 representing a high risk of a schedule interruption) having a severe projected schedule interruption 250 (e.g., a high projected schedule interruption value 218) and a severe delay (e.g., a high delay value 224). As one example, region 254b represents a moderate delay risk (e.g., delay risk value 208 representing a medium risk of a schedule interruption) having a moderate projected schedule interruption 250 a medium projected schedule interruption value 218) and a moderate delay 252 a medium delay value 224). As one example, region 254c represents a low delay risk (e.g., delay risk value 208 representing a low risk of a schedule interruption) having a low projected schedule interruption 250 (e.g., a low projected schedule interruption value 218) and a low delay 252 (e.g., a low delay value 224). Risk ID values 242 may be appropriately positioned within one of regions 254a, 254b, or 254c based on the severity of the delay risk corresponding to the particular equipment 118 (Fig. 1).

As one example, delay risk module 210 also include platform performance module 256. Platform performance module 256 computes performance data 258. As one example, performance data 258 quantifies the performance of certain platforms 108 (Fig. 1) or all platforms 108 of fleet 266 (Fig. 1). In one example implementation, performance data 258 may be expressed as ratio between delay risk and platform reliability.

In one example implementation, platform performance module 256 accesses delay risk data 126 (e.g., delay risk values 208) and dispatch reliability data 132 (e.g., dispatch reliability values 206) for each platform 108 (Fig. 1). Platform performance module 256 is configured to classify or categorize some or all of platforms 108 into various performance categories 260 based on a comparison of delay risk data 126 and dispatch reliability data 132 for platform 108.

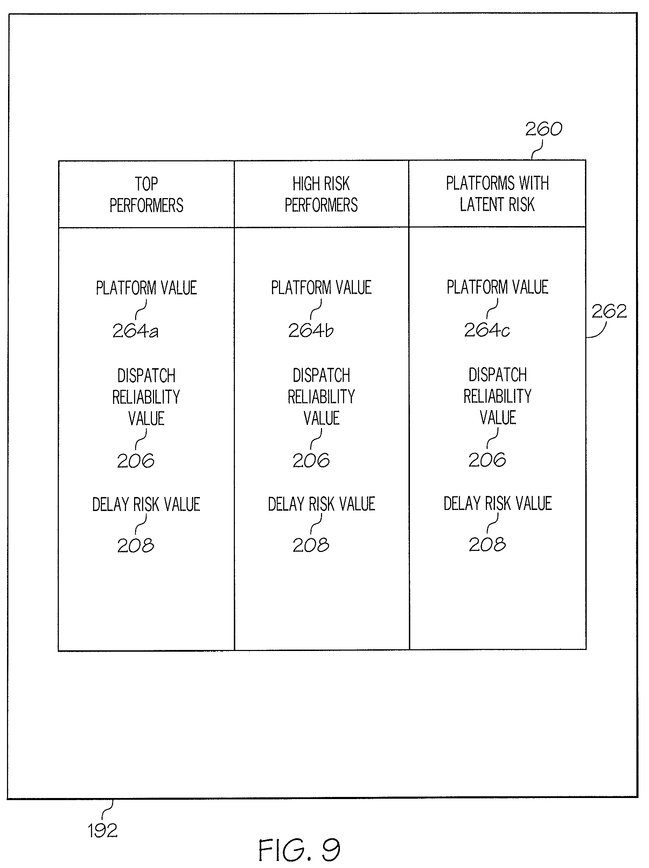

Referring to Fig. 9, as one example, performance data 258 may be displayed graphically by display module 188 (Fig. 1), for example, on display 192. As one example, display 192 includes a field for performance categories 260 and a field for platform data 262. In one example implementation, performance categories 260 may be expressed, for example, as "top performers," "bottom performers," "high risk performers," "low risk performers," "platforms with latent risks," and the like.

In one example implementation, platform data 262 may be expressed as platform value 264. As one example, platform value 264 includes or represents an identification of a particular platform 108, for example, a model number, a tail number, or the like. Platform data 262 may also include delay risk value 208 and dispatch reliability value 206 for platform 108.

In the illustrated example implementation, performance category 260 for "top performers" may include platforms 108 having a high reliability and a low delay risk. As one example, platform 108 identified by platform value 264a may have a high associated dispatch reliability value 206 and a low associated delay risk value 208.

In the illustrated example implementation, performance category 260 for "high risk performers" may include platforms 108 having a low reliability and a high delay risk. As one example, platform 108 identified by platform value 264b may have a low associated dispatch reliability value 206 and a high associated delay risk value 208.

In the illustrated example implementation, performance category 260 for "platforms with latent risk" may include platforms 108 having a high reliability and a high delay risk. As one example, platform 108 identified by platform value 264c may have a high associated dispatch reliability value 206 and a high associated delay risk value 208.

As one example, platform performance module 256 may include rules that govern the classification of platforms 108. As one example, delay risk module 210 or platform performance module 256 may include a rules module (not explicitly illustrated) configured to store and apply the rules utilized to categorize platforms 108 (Fig. 1).

In one example implementation, platform 108 is classified as having a high reliability when dispatch reliability value 206 meets or exceeds a predetermined dispatch reliability threshold (not explicitly illustrated). In one example implementation, platform 108 is classified as having a low reliability when dispatch reliability value 206 is below the predetermined dispatch reliability threshold. The predetermined dispatch reliability threshold may be determined based on requirements set by platform system 102 (Fig. 1). As one example, the predetermined dispatch reliability threshold may be ninety-eight (98) percent.

In one example implementation, platform 108 is classified as having a low delay risk when delay risk value 208 is below a predetermined delay risk threshold (not explicitly illustrated). In one example implementation, platform 108 is classified as having a high delay risk when delay risk value 208 above the predetermined delay risk threshold. The predetermined delay risk threshold may be determined based on requirements set by platform system 102 (Fig. 1).

In one example implementation, delay risk data 126 may also be used with disruption severity data (not explicitly illustrated) to make decisions concerning whether or not to act in response to delay risk (e.g., a high probability of a future schedule interruption). Disruption severity data includes a quantification of severity or a representation the impact to operations of platform 108 (Fig. 1) due to a fault in equipment 118 (Fig. 1). As one example, disruption severity data may quantify the severity of the impact to platform 108 when particular equipment 118 failed in the past. As example, disruption severity data may be expressed as a numerical value (e.g., disruption severity value) (not explicitly illustrated) representing, for example, the length of time of the delay resulting from a fault in particular equipment 118, the number of passengers affected by a schedule interruption due to a fault in particular equipment 118, the cost to platform system 102 (Fig. 1) (e.g., an airline system) as a result of the schedule interruption, and the like. As one example, when delay risk (e.g., delay risk value 208) is high (e.g., is above a predetermined delay risk threshold) and the disruption severity value is high (e.g., is above a predetermined disruption severity threshold), action may be taken to reduce the risk of a potential schedule interruption. As one example, the combination of delay risk and disruption severity may be used to make maintenance management decisions, for example, high risk and high severity equipment 118 may be receive preemptive inspection or maintenance on particular platforms 108 or fleet 266.

In certain implementations, the manner in which the disruption severity may be generated and/or provided is described in greater detail in U.S. Patent 9,037,320 to Kesler et al., entitled *Unscheduled Maintenance Disruption Severity and Flight Decision System and Method.*

Referring to Fig. 10, and with reference to Figs. 1-4, one example of method, generally designated 500, for managing platform system 102 is disclosed. Generally, method 500 is related to predicting potential schedule interruptions of platforms 108 and/or fleet 266 of platform system 102 due to faults in equipment 118. Modifications, additions, or omissions may be made to method 500 without departing from the scope of the present disclosure. Method 500 may include more, fewer, or other steps. Additionally, steps may be performed in any suitable order.

In one example implementation, method 500 includes the step of receiving schedule interruption data 124 and at least one of delay risk data 126, deferral risk data 128, deferral data 130, and dispatch reliability data 132, as shown at block 502. As one example, schedule interruption data 124 and at least one of delay risk data 126, deferral risk data 128, deferral data 130, and dispatch reliability data 132 are received by schedule interruption prediction module 134 of platform management apparatus 104 from data sources 122 over data network 106.

In one example implementation, method 500 includes the step of tracking schedule interruption data 124 and at least one of delay risk data 126, deferral risk data 128, deferral data 130, and dispatch reliability data 132 over time, as shown at block 504. As one example, schedule interruption data 124 and at least one of delay risk data 126, deferral risk data 128, deferral data 130, and dispatch reliability data 132 are tracked over time by data tracking module 136 of schedule interruption prediction module 134.

In one example implementation, method 500 includes the step of computing cross-correlations 140 between schedule interruption data 124 and at least one of delay risk data 126, deferral risk data 128, deferral data 130, and dispatch reliability data 132, as shown at block 510. As one example, cross-correlations 140 of schedule interruption data 124 and at least one of delay risk data 126, deferral risk data 128, deferral data 130, and dispatch reliability data 132 are computed by data correlation module 138 of schedule interruption prediction module 134.

In one example implementation, method 500 includes the step of computing statistically significant probability of a schedule interruption 144 based on cross-correlations 140 and trend 146 of at least one of delay risk data 126, deferral risk data 128, deferral data 130, and dispatch reliability data 132 projected over a predetermined time period into the future, as shown at block 512. As one example, statistically significant probability of a schedule interruption 144 based on cross-correlations 140 and trend 146 is computed by data trend analysis module 142 of schedule interruption prediction module 134.

In one example implementation, method 500 includes the step of computing auto-correlations 148 between at least one of delay risk data 126, deferral risk data 128, deferral data 130, and dispatch reliability data 132, as shown at block 506. As one example, auto-correlations 148 between at least one of delay risk data 126, deferral risk data 128, deferral data 130, and dispatch reliability data 132 are computed by data correlation module 138.

In one example implementation, method 500 includes the step of computing trends 146 for delay risk data 126, deferral risk data 128, deferral data 130, and dispatch reliability data 132 based on auto-correlations 148, as shown at block 508. As one example, trends 146 are computed by data trend analysis module 142.

In one example implementation, method 500 includes the step of displaying schedule interruption data 124 and at least one of delay risk data 126, deferral risk data 128, deferral data 130, and dispatch reliability data 132 over time, as shown at block 514.

In one example implementation, method 500 includes the step of displaying statistically significant probability of a schedule interruption 144 at one or more times during the predetermined time period into the future, as shown at block 516.

Referring to Fig. 10, and with reference to Figs. 1 and 7-9, one example of method, generally designated 600, for managing platform system 102 is disclosed. Generally, method 600 is related to determining delay risk related to potential schedule interruptions of fleet 266 and/or individual platforms 108 of platform system 102 due to faults in equipment 118. Modifications, additions, or omissions may be made to method 500 without departing from the scope of the present disclosure. Method 500 may include more, fewer, or other steps. Additionally, steps may be performed in any suitable order.

In one example implementation, method 600 includes the step of receiving projected schedule interruption data 212 and delay data 214, as shown at block 602. As one example, projected schedule interruption data 212 and delay data 214 are received by delay risk module 210 of platform management apparatus 104 from data sources 122 over data network 106.

In one example implementation, method 600 includes the step of computing projected schedule interruption data 212 from complement of dispatch reliability data 220 and schedule data 222. As one example, projected schedule interruption data 212 is computed prior to being received by delay risk module 210. As one example, complement of dispatch reliability data 220 and schedule data 222 are received by delay risk module 210 and delay risk module 210 computes projected schedule interruption data 212.

In one example implementation, method 600 includes the step of computing delay risk data 126 based on projected schedule interruption data 212 and delay data 214, as shown at block 604. As one example, delay risk data 126 is computed by risk analysis module 228 of delay risk module 210.

In one example implementation, method 600 includes the step of computing performance data 258 for platforms 108 based on delay risk data126 and dispatch reliability data 132, as shown at block 606. As one example, performance data 258 is computed by platform performance module 256 of delay risk module 210.

In one example implementation, method 600 includes the step of categorizing platforms 108 into performance categories 260 based on performance data 258, as shown at block 608. As one example, platforms 108 are categorized into performance categories 260 by performance module 256.

In one example implementation, method 600 includes the step of displaying delay risk data 126, as shown at block 610.

In one example implementation, method 600 includes the step of displaying performance data 258, as shown at block 612.

Accordingly, the data computed and produced by the disclosed systems, apparatuses, and methods may be used to make various risk mitigation and business decisions related to management of a platform system (e.g., an airline system) including a fleet of platforms (e.g., aircraft) and supporting engineering resources. As one example, the disclosed systems, apparatuses, and methods may predict when a schedule interruption is becoming more likely to occur based on current data of the platform or fleet and/or quantify the risk of a future schedule interruption based on the current data. Accordingly, decisions may be made concerning how to reduce the risk of future schedule interruptions. As one example, decisions may be made concerning whether or not to defer a maintenance activity or concerning how long a maintenance deferral may last based on predicted schedule interruptions. As one example, decisions may be made concerning whether to take preemptive actions (e.g., inspections and/or maintenance of equipment) prior to a predicted fault in equipment that may lead to a schedule interruption. As one example, decisions may be made concerning how to manage maintenance capacity of a landing station based on the schedule and/or locations of the platforms and the predicted schedule interruptions due to a fault in equipment. As one example, decisions may be made concerning which platforms should be assigned to which operations or routes, for example, based on risk, performance, and reliability. As one example, maintenance engineering resources, capacity, and/or manpower of either an airline system and/or an aircraft manufacturer may be more effectively allocated to determine preventative and/or corrective actions for aircraft systems, components or other equipment causing elevated risk over time.

The preceding subject matter characterizes various examples of the present disclosure. Each example also includes the subject matter of each other example.

Many of the functional units described in the present disclosure have been labeled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of computer readable program code may, for instance, include one or more physical or logical blocks of computer instructions, which may, for instance, be organized as an object, procedure, or function. Nevertheless, the executables of an identified module need not be physically located together, but may include disparate instructions stored in different locations which, when joined logically together, form the module and achieve the stated purpose for the module.

As one example, a module of computer readable program code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. Where a module or portions of a module are implemented in software, the computer readable program code may be stored and/or propagated on in one or more computer readable medium(s).

The computer readable medium may be a tangible computer readable storage medium storing the computer readable program code. The computer readable storage medium may be, for example, but not limited to, an electronic, magnetic, optical, electromagnetic, infrared, holographic, micromechanical, or semiconductor system, apparatus, or device, or any suitable combination of the foregoing.

More specific examples of the computer readable medium may include but are not limited to a portable computer diskette, a hard disk, a random access memory ("RAM"), a read-only memory ("ROM"), an erasable programmable read-only memory ("EPROM" or Flash memory), a portable compact disc read-only memory ("CD-ROM"), a digital versatile disc ("DVD"), an optical storage device, a magnetic storage device, a holographic storage medium, a micromechanical storage device, or any suitable combination of the foregoing. In the context of the present disclosure, a computer readable storage medium may be any tangible medium that can contain, and/or store computer readable program code for use by and/or in connection with an instruction execution system, apparatus, or device.

The computer readable medium may also be a computer readable signal medium. A computer readable signal medium may include a propagated data signal with computer readable program code embodied therein, for example, in baseband or as part of a carrier wave. Such a propagated signal may take any of a variety of forms, including, but not limited to, electrical, electro-magnetic, magnetic, optical, or any suitable combination thereof. A computer readable signal medium may be any computer readable medium that is not a computer readable storage medium and that can communicate, propagate, or transport computer readable program code for use by or in connection with an instruction execution system, apparatus, or device. Computer readable program code embodied on a computer readable signal medium may be transmitted using any appropriate medium, including but not limited to wireless, wireline, optical fiber cable, Radio Frequency ("RF"), or the like, or any suitable combination of the foregoing

In one example, the computer readable medium may include a combination of one or more computer readable storage mediums and one or more computer readable signal mediums. For example, computer readable program code may be both propagated as an electro-magnetic signal through a fiber optic cable for execution by a processor and stored on RAM storage device for execution by the processor.

Computer readable program code for carrying out operations for aspects of the disclosed systems, apparatuses, and methods may be written in any combination of one or more programming languages, including an object oriented programming language such as Java, Smalltalk, C++ or the like and conventional procedural programming languages, such as the "C" programming language or similar programming languages. The computer readable program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN") or a wide area network ("WAN"), or the connection may be made to an external computer (for example, through the Internet using an Internet Service Provider).

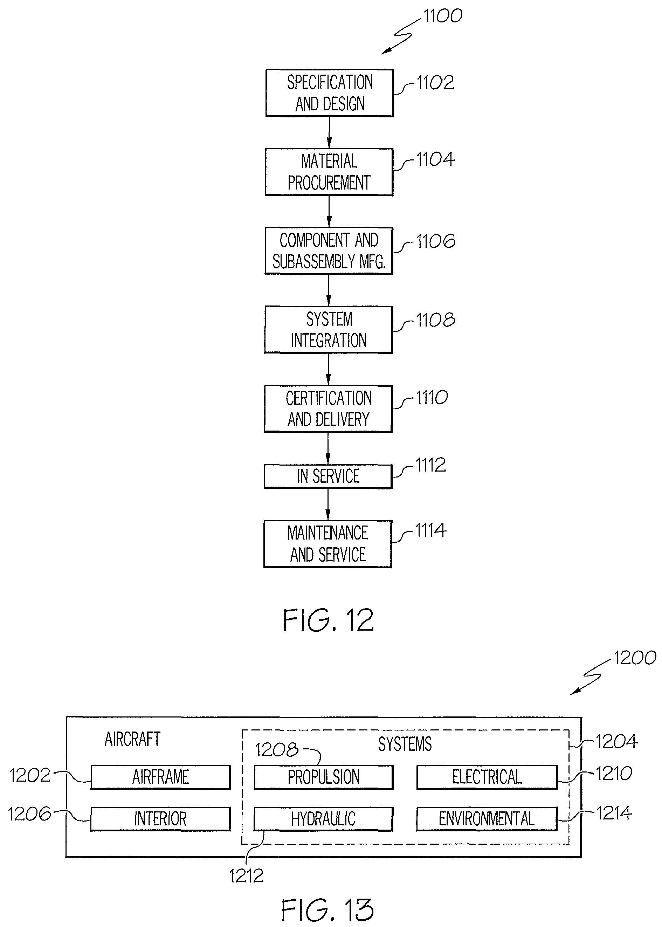

Examples of the present disclosure may be described in the context of aircraft manufacturing and service method 1100 as shown in Fig. 12 and aircraft 1200 as shown in Fig. 13. Aircraft 1200 may be one example of vehicle 110 (e.g., aircraft 112) illustrated in Fig. 1.

During pre-production, the illustrative method 1100 may include specification and design, as shown at block 1102, of aircraft 1200 and material procurement, as shown at block 1104. During production, component and subassembly manufacturing, as shown at block 1106, and system integration, as shown at block 1108, of aircraft 1200 may take place. Thereafter, aircraft 1200 may go through certification and delivery, as shown block 1110, to be placed in service, as shown at block 1112. While in service, aircraft 1200 may be scheduled for routine maintenance and service, as shown at block 1114. Routine maintenance and service may include modification, reconfiguration, refurbishment, etc. of one or more systems of aircraft 1200.

Each of the processes of illustrative method 1100 may be performed or carried out by a system integrator, a third party, and/or an operator (e.g., a customer). For the purposes of this description, a system integrator may include, without limitation, any number of aircraft manufacturers and major-system subcontractors; a third party may include, without limitation, any number of vendors, subcontractors, and suppliers; and an operator may be an airline, leasing company, military entity, service organization, and so on.

As shown in Fig. 13, aircraft 1200 produced by illustrative method 1100 may include airframe 1202 with a plurality of high-level systems 1204 and interior 1206. Examples of high-level systems 1204 include one or more of propulsion system 1208, electrical system 1210, hydraulic system 1212 and environmental system 1214. Any number of other systems may be included. Although an aerospace example is shown, the principles disclosed herein may be applied to other industries, such as the automotive industry, the marine industry, the construction industry or the like.

Further, the disclosure comprises examples according to the following clauses:
Clause 1. A platform management system comprising: a data network that receives input data from data sources, wherein said input data comprises schedule interruption data and at least one of delay risk data, deferral risk data, deferral data, and dispatch reliability data; and a schedule interruption prediction module that receives said input data from said data network, wherein said schedule interruption prediction module comprises: a data tracking module that tracks said schedule interruption data and said at least one of said delay risk data, said deferral risk data, said deferral data, and said dispatch reliability data over time; a data correlation module that computes cross-correlations between said schedule interruption data and said at least one of said delay risk data, said deferral risk data, said deferral data, and said dispatch reliability data; and a data trend analysis module that computes a statistically significant probability of a schedule interruption based on said cross-correlations and a trend of said at least one of said delay risk data, said deferral risk data, said deferral data, and said dispatch reliability data projected over a predetermined time period into the future.
Clause 2. The system of clause 1 wherein: said data correlation module further computes auto-correlations between at least one of said delay risk data, said deferral risk data, said deferral data, and said dispatch reliability data; and said data trend analysis module further computes said trend based on said auto-correlations.
Clause 3. The system of any of the preceding clauses wherein said statistically significant probability of said schedule interruption occurs when said cross-correlations meet a predetermined significance threshold during said predetermined time period into the future.
Clause 4. The system of any of the preceding clauses further comprising a fleet, wherein said fleet comprises platforms, and wherein each platform comprises equipment.
Clause 5. The system of any of the preceding clauses wherein: said schedule interruption data comprises a quantification of schedule interruptions of said platforms due to prior faults in said equipment; said delay risk data comprises a quantification of delay risk related to potential schedule interruptions of said platforms due to future faults in said equipment; said deferral risk data comprises a quantification of deferral risk related to said potential schedule interruptions due to maintenance deferrals of said platforms; said deferral data comprises a quantification of said maintenance deferrals of said platforms; and said dispatch reliability data comprises a quantification of future schedule reliability of said platforms.
Clause 6. The system of any of the preceding clauses further comprising a display module configured to display at least one of said input data tracked over time and said statistically significant probability of said schedule interruption at one or more times during said predetermined time period into the future.
Clause 7. A method for managing a platform system, said method comprising: tracking schedule interruption data and at least one of delay risk data, deferral risk data, deferral data, and dispatch reliability data over time; computing cross-correlations between said schedule interruption data and said at least one of said delay risk data, said deferral risk data, said deferral data, and said dispatch reliability data; and computing a statistically significant probability of a schedule interruption based on said cross-correlations and a trend of said at least one of said delay risk data, said deferral risk data, said deferral data, and said dispatch reliability data projected over a predetermined time period into the future.
Clause 8. The method of clause 7 further comprising: computing auto-correlations between at least one of said delay risk data, said deferral risk data, said deferral data, and said dispatch reliability data; and computing said trend based on said auto-correlations.
Clause 9. The method of clause 7 or 8 wherein: said schedule interruption data comprises a quantification of schedule interruptions of platforms due to prior faults in equipment of said platform; said delay risk data comprises a quantification of delay risk related to potential schedule interruptions of said platforms due to future faults in said equipment; said deferral risk data comprises a quantification of deferral risk related to said potential schedule interruptions due to maintenance deferrals of said platforms; said deferral data comprises a quantification of said maintenance deferrals of said platforms; and said dispatch reliability data comprises a quantification of future schedule reliability of said platforms.
Clause 10. The method of any of clauses 7 to 9 further comprising: displaying said schedule interruption data and said at least one of said delay risk data, said deferral risk data, said deferral data, and said dispatch reliability data over time; and displaying said statistically significant probability of said schedule interruption at one or more times during said predetermined time period into the future.
Clause 11. A platform management system comprising: a data network that receives input data from data sources, wherein said input data comprises projected schedule interruption data and delay data; and a delay risk module that receives said input data from said data network, wherein said delay risk module comprises a risk analysis module that computes delay risk data based on said projected schedule interruption data and said delay data.
Clause 12. The system of clause 11 further comprising a fleet, wherein fleet comprises platforms, and wherein each platform comprises equipment.
Clause 13. The system of clause 11 or 12 wherein said delay risk data comprises a quantification of delay risk related to potential schedule interruptions of said platforms due to future faults in said equipment.
Clause 14. The system of clause 11, 12 or 13 wherein: said projected schedule interruption data comprises a quantification of said potential schedule interruptions of said platforms due to future faults in said equipment; said delay data comprises a quantification of delay times resulting from prior schedule interruptions of said platforms due to prior faults in said equipment; and said delay risk data comprises a computational product of said projected schedule interruption data and said delay data.
Clause 15. The system of any of clauses 11 to 14 further comprising a platform performance module that computes performance data based on said delay risk data and dispatch reliability data and categorizes said platforms into performance categories based on said performance data.
Clause 16. The system of any of clauses 11 to 15 further comprising a display module configured to display at least one of said delay risk data and said performance categories.
Clause 17. A method for managing a platform management system, said method comprising: receiving projected schedule interruption data and delay data; and computing delay risk data based on said projected schedule interruption data and said delay data.
Clause 18. The method of clause 17 wherein: said projected schedule interruption data comprises a quantification of potential schedule interruptions of platforms due to future faults in equipment of said platforms; said delay data comprises a quantification of delay times resulting from prior schedule interruptions of said platforms due to prior faults in said equipment; and said delay risk data comprises a computational product of said projected schedule interruption data and said delay data.
Clause 19. The method of clause 17 or 18 further comprising: computing performance data for said platforms based on said delay risk data and dispatch reliability data; and categorizing said platforms into performance categories based on said performance data.
Clause 20. The method of clause 17, 18 or 19 further comprising displaying said delay risk data and said performance data.

The systems, apparatus and methods shown or described herein may be employed during any one or more of the stages of the manufacturing and service method 1100. For example, components or subassemblies corresponding to component and subassembly manufacturing (block 1106) may be fabricated or manufactured in a manner similar to components or subassemblies produced while aircraft 1200 is in service (block 1112). Also, one or more examples of the apparatus, systems and methods, or combination thereof may be utilized during production stages (blocks 1108 and 1110). Similarly, one or more examples of the systems, apparatuses, and methods, or a combination thereof, may be utilized, for example and without limitation, while aircraft 1200 is in service (block 1112) and during maintenance and service stage (block 1114). As one example, the disclosed systems, apparatuses, and methods may be utilized during service (block 1112) and/or maintenance and service (block 1114) to manage aircraft maintenance and reduce the risk of future schedule interruptions.

Although various examples of the disclosed systems, apparatuses, and methods have been shown and described, modifications may occur to those skilled in the art upon reading the specification. The present application includes such modifications and is limited only by the scope of the claims.

## Claims

1. A platform management system (100) comprising:
a data network (106) that receives input data (120) from data sources (122), wherein said input data comprises schedule interruption data (124) and at least one of delay risk data (126), deferral risk data (128), deferral data (130), and dispatch reliability data (132); and
a schedule interruption prediction module (134) that receives said input data from said data network, wherein said schedule interruption prediction module comprises:
a data tracking module (136) that tracks said schedule interruption data and said at least one of said delay risk data, said deferral risk data, said deferral data, and said dispatch reliability data over time;
a data correlation module (138) that computes cross-correlations (140) between said schedule interruption data and said at least one of said delay risk data, said deferral risk data, said deferral data, and said dispatch reliability data; and
a data trend analysis module (142) that computes a statistically significant probability of a schedule interruption (144) based on said cross-correlations and a trend (146) of said at least one of said delay risk data, said deferral risk data, said deferral data, and said dispatch reliability data projected over a predetermined time period into the future.

2. The system of Claim 1 wherein:
said data correlation module further computes auto-correlations (148) between at least one of said delay risk data, said deferral risk data, said deferral data, and said dispatch reliability data; and
said data trend analysis module further computes said trend based on said auto-correlations.

3. The system of Claim 1 or 2 wherein said statistically significant probability of said schedule interruption occurs when said cross-correlations meet a predetermined significance threshold during said predetermined time period into the future.

4. The system of Claim 1, 2 or 3 further comprising a fleet (266), wherein said fleet comprises platforms (108), and wherein each platform comprises equipment (118).

5. The system of Claim 4 wherein:
said schedule interruption data comprises a quantification of schedule interruptions of said platforms due to prior faults in said equipment;
said delay risk data comprises a quantification of delay risk related to potential schedule interruptions of said platforms due to future faults in said equipment;
said deferral risk data comprises a quantification of deferral risk related to said potential schedule interruptions due to maintenance deferrals of said platforms;
said deferral data comprises a quantification of said maintenance deferrals of said platforms; and
said dispatch reliability data comprises a quantification of future schedule reliability of said platforms.

6. The system of any of Claims 1 to 5 further comprising a display module (188) configured to display at least one of said input data tracked over time and said statistically significant probability of said schedule interruption at one or more times during said predetermined time period into the future.

7. A method (500) for managing a platform system, said method comprising:
tracking (504) schedule interruption data and at least one of delay risk data, deferral risk data, deferral data, and dispatch reliability data over time;
computing (510) cross-correlations between said schedule interruption data and said at least one of said delay risk data, said deferral risk data, said deferral data, and said dispatch reliability data; and
computing (512) a statistically significant probability of a schedule interruption based on said cross-correlations and a trend of said at least one of said delay risk data, said deferral risk data, said deferral data, and said dispatch reliability data projected over a predetermined time period into the future.

8. The method of Claim 7 further comprising:
computing (506) auto-correlations between at least one of said delay risk data, said deferral risk data, said deferral data, and said dispatch reliability data; and
computing (508) said trend based on said auto-correlations.

9. The method of Claim 7 or 8 wherein:
said schedule interruption data comprises a quantification of schedule interruptions of platforms due to prior faults in equipment of said platform;
said delay risk data comprises a quantification of delay risk related to potential schedule interruptions of said platforms due to future faults in said equipment;
said deferral risk data comprises a quantification of deferral risk related to said potential schedule interruptions due to maintenance deferrals of said platforms;
said deferral data comprises a quantification of said maintenance deferrals of said platforms; and
said dispatch reliability data comprises a quantification of future schedule reliability of said platforms.

10. The method of Claim 7, 8 or 9 further comprising:
displaying (514) said schedule interruption data and said at least one of said delay risk data, said deferral risk data, said deferral data, and said dispatch reliability data over time; and
displaying (516) said statistically significant probability of said schedule interruption at one or more times during said predetermined time period into the future.
